# EUROPEAN PATENT APPLICATION

(11) **EP 2 477 166 A1**
(43) Date of publication of application: **18.07.2012**
(21) Application number: 11183068.3
(22) Date of filing: 28.09.2011
(51) Int. Cl.: G07F 17/32, G06F 1/16, H04M 1/05

(54) **Wearable casino gaming display and tracking system**

(30) Priority: 14.01.2011 US 7484
(71) Applicant: IGT, Reno, NV 89521 (US)
(72) Inventor: Parrott, Gregory H., Reno, NV Nevada 89519 (US); Le, Sue, Reno, NV Nevada 89521 (US)
(74) Representative: Franzolin, Luigi

(57) **Abstract**

A wearable display device including a wearable display device controller configured to communicate with a gaming machine or a casino gaming system. The wearable display device may be configured to display visual content in response to a communication from the casino gaming system or the gaming machine. The wearable display device may be integrated with a fashion accessory or garment.

## Description

BACKGROUND

This invention relates to display of entertainment content for gaming machines such as slot machines and video poker machines. More particularly, the present invention relates to methods and devices for providing display capabilities for gaming machines or casino gaming systems.

Gaming machines are often equipped with flashing or pulsating lights designed to attract players. Gaming machines are also frequently equipped with fixed video display screens capable of being used to present light shows, animations, and game content to attract players. Light and image displays are also frequently used in casino environments to entertain patrons. Such lights and displays also serve to increase excitement for players of the gaming machines on which they are located. Such lights and displays are typically connected to the gaming machines by wires and are integrated into the gaming machine cabinet or top box.

SUMMARY

Some implementations of the invention provide a system comprising a first wearable display device controller configured to communicate with a gaming machine or a casino gaming system and a first wearable display device configured to communicate with the first wearable display device controller. The first wearable display device may be configured to display first content in response to a communication from the casino gaming system or the gaming machine. The wearable display device may be integrated with a fashion accessory or garment.

Other aspects of the invention include the presentation of content using the system. For example, the content may comprise a still image, an animation, or a motion video. The content may be displayed on the wearable display device in coordination with a display of content by a casino gaming system or a gaming machine. For example, the coordination may comprise displaying the content on the wearable display device in synchronicity with displaying content on a casino gaming system or gaming machine, displaying content on a wearable display device comprising substantially similar material to that displayed on a casino gaming system or gaming machine, displaying an animation that spans between a wearable display device and a display device of a casino gaming system or gaming machine, or where content displayed on a wearable display device shares one or more common content elements or content themes with content displayed on a display of a casino gaming machine.

One embodiment may include a system with a first wearable display device controller configured to communicate with a gaming machine and a first wearable display device configured to communicate with the first wearable display device controller. The first wearable display device may be configured to display first content in response to a communication from the gaming machine. The first content may be a still image, animation, or text. The first wearable display device may be integrated with a fashion accessory or garment. In some implementations, the wearable display device may be a flexible display.

In some embodiments, the display of the first content may be in coordination with a display of second content by the gaming machine. The coordination may include displaying the first content in synchronicity with displaying the second content. The coordination may alternatively, or additionally, involve displaying an animation including the first content and the second content, wherein the animation spans between the first wearable display device and a display device of the gaming machine. The coordination may include the first content and the second content sharing one or more common content elements or common content themes.

The wearable display device controller may be further configured to cause a wearable display device to indicate a team of a player wearing the wearable display device. The wearable display device controller may be further configured to cause the wearable display device to indicate that another player affiliated with the team has experienced a gaming event. For example, the content displayed by the wearable display device may include winning event content if the team or a team member experiences a winning event.

In some implementations, the system may be used to provide player tracking functionality. For example, the system may additionally include a player tracking device configured to cause the wearable display device to display a light-based signature and one or more detection devices configured to detect a light-based signature and to communicate detection of the detected light-based signature to a player tracking system or the player tracking device. The light-based signature may be defined by the player tracking device. The player tracking device or the player tracking system may be further configured to determine if the detected light-based signature corresponds with the light-based signature. The one or more detection devices may be further configured to detect the detected light-based signature only within a defined zone; the defined zone may encompass an area where a player playing the gaming machine would necessarily be located.

In yet other implementations, the player tracking device may be further configured to detect a second light-based signature outside of the defined zone and determine if the second detected light-based signature corresponds with the first detected light-based signature.

In some implementations, the one or more detection devices are configured to detect infrared or ultraviolet light and the wearable display device is configured to emit infrared or ultraviolet light.

In some additional implementations, the player tracking device may be further configured to cause second through Nth wearable display devices to display corresponding second through Nth light-based signatures. The light-based signature and the second through the N^{th} light-based signatures may be different from each other. In some additional implementations, the player tracking device may be configured to cause each of the light based-signature and the second through Nth light-based signatures to each be displayed by the corresponding wearable display device of the wearable display device and the second through Nth wearable display devices at a different time.

In yet other implementations, the wearable display device controller may be further configured to accept an input from a player and the wearable display device configured to display third content in response to the input. The third content may be unrelated to play of a casino game and may indicate a request for refreshments, a request for assistance, or a request for companionship. The input from the player may be provided via a user interface provided by a paired personal electronic device, the gaming machine, a casino gaming system, a player tracking device, a token, or a control integrated with the system. For user interfaces with a control, the control may include a pressure-sensitive region or a gesture-sensing device. For user interfaces provided by a token, the token may take the form of a radio-frequency identification (RFID) tag, a printed voucher, or a magnetic stripe card. For user systems provided by a paired personal electronic device, the paired personal electronic device may take the form of a cell phone, a smart phone, a personal digital assistant (PDA), a digital wallet, or a personal media player.

In some embodiments, the wearable display device may be configured to allow the wearable display device to continue to display the first content after communication between the wearable display device controller and the gaming machine ceases. In some configurations, the wearable display device may be a bi-stable display. A bi-stable display may, for example, be a microelectromechanical system (MEMS) display, a cholesteric liquid crystal display, an electrophoretic display, or an e-paper display.

In yet other embodiments, the wearable display device may be a flexible display, a pixelated display, or a flexible, pixelated display. For example, a pixelated display may be selected from the group including organic light emitting diode (OLED) displays, polymer light emitting diode (PLED) displays, light emitting diode (LED) displays, microelectromechanical systems (MEMS) displays, liquid crystal displays (LCDs), cholesteric LCDs, electrophoretic displays, and e-paper displays. The wearable display may also or alternatively feature one or more light-emitting devices. For example, the light-emitting devices may be selected from the group including lamps, LEDs, electroluminescent wires, electroluminescent sheets, and projectors.

In some embodiments, the wearable display device controller may be connected to the gaming machine. Alternatively, or additionally, the wearable display device controller may be connected to the wearable display device. In some implementations, the wearable display device controller may include a first portion and a second portion, the first portion connected to the gaming machine and the second portion connected to the first wearable display device, and the first portion and the second portion physically unconnected with each other but configured to wirelessly communicate with each other. The first portion and the second portion may include a standardized wireless display interface.

In one technique, gaming content is displayed by establishing a communications link between a wearable display system and a gaming system, communicating first content to the wearable display system, and displaying the first content on the wearable display system, wherein the first content comprises a still image, animation, or text. The technique may further include coordinating the display of the first content on the wearable display system with the display of second content on the gaming system.

Yet another technique may involve configuring a wearable display device for communication with a gaming machine, communicating first instructions to the wearable display device from the gaming machine, causing first content to be displayed on the wearable display device responsive to the instructions, detecting a detected light-based signature, and comparing the detected light-based signature against the light-based signature. The first content may comprise a still image, animation, or motion video. The first content may be displayed in coordination with a display of second content by the gaming machine. The coordination may include displaying the first content in synchronicity with displaying the second content or displaying first content and the second content including substantially similar material. The coordination may include displaying an animation including the first content and the second content, wherein the animation spans between the wearable display device and a display device of the gaming machine. The coordination may alternatively or additionally include the first content and the second content sharing one or more content elements or themes. The first content may include a first light-based signature and the technique may further involve detecting a detected light-based signature and comparing the detected light-based signature against the light-based signature. The technique may also include determining if the detected light-based signature corresponds with the light-based signature.

The technique may also include configuring second through Nth wearable display devices for communication with the gaming machine, communicating second through Nth instructions to second through N^{th} display devices, respectively, from the gaming machine, causing second through N^{th} light-based signatures to be displayed by second through N^{th} wearable display devices, respectively, responsive to the second through N^{th} instructions, respectively and comparing the detected light-based signature against the second through N^{th} light-based signatures. Further implementations of the technique may include determining which of the second through N^{th} light-based signatures corresponds with the detected light-based signature. Each of the light-based signatures and second through N^{th} light-based signatures may be unique with respect to the other light-based signatures of the light-based signatures and/or displayed at a different time. The detecting of the light-based signature may only detect light-based signatures in a defined area. The technique may also include detecting a second detected light-based signature outside of the defined area and comparing the detected light-based signature against the second detected light-based signature.

BRIEF DESCRIPTION OF THE DRAWINGS

Fig. 1 depicts one example of a player wearing a wearable display device and interacting with a gaming machine.

Fig. 2 provides a system diagram depicting a wearable display device and a gaming machine.

Fig. 3 depicts an example wearable display device integrated with a garment.

Fig. 4 depicts an example wearable display device integrated with a fashion accessory.

Fig. 5 depicts an example wearable display device integrated with an arm band.

Fig. 6 provides a system diagram depicting interactions between a casino gaming system and multiple wearable display devices.

Fig. 7 is a flow chart outlining a method of using a wearable display device with a gaming machine.

Fig. 8 is a flow chart outlining a method of using a wearable display device with a gaming machine for authentication purposes.

Figs. 9A-9E are schematic depictions of stages of the method outlined in Fig. 8.

Fig. 10 is a flow chart for play of a scavenger poker game with wearable display devices.

Fig. 11 is a schematic depiction of a scavenger poker game with wearable display devices.

Fig. 12 is a flow chart for play of a musical chairs game with wearable display devices.

Figs. 13A-13D are schematic depictions of a musical chairs game with wearable display devices.

Figs. 14A-14C are flow charts of various methods of using a wearable display system in a casino environment.

Fig 15 is a schematic depiction of various methods of using a wearable display system in a casino environment.

DETAILED DESCRIPTION

Although the following text sets forth a detailed description of numerous different embodiments, it should be understood that the legal scope of the invention is defined by the words of the claims set forth at the end of this patent. The detailed description is to be construed as an example only and does not describe every possible embodiment since describing every possible embodiment would be impractical, if not impossible. Numerous alternative embodiments may be implemented, using either current technology or technology developed after the filing date of this patent, which would still fall within the scope of the claims defining the invention.

It should also be understood that, unless a term is expressly defined in this patent using the sentence "As used herein, the term '____' is hereby defined to mean..." or a similar sentence, there is no intent to limit the meaning of that term, either expressly or by implication, beyond its plain or ordinary meaning, and such term should not be interpreted to be limited in scope based on any statement made in any section of this patent (other than the language of the claims). To the extent that any term recited in the claims at the end of this patent is referred to in this patent in a manner consistent with a single meaning, that is done for sake of clarity only so as to not confuse the reader, and it is not intended that such claim term by limited, by implication or otherwise, to that single meaning. Finally, unless a claim element is defined by reciting the word "means" and a function without the recital of any structure, it is not intended that the scope of any claim element be interpreted based on the application of 35 U.S.C. § 112, sixth paragraph.

Overview

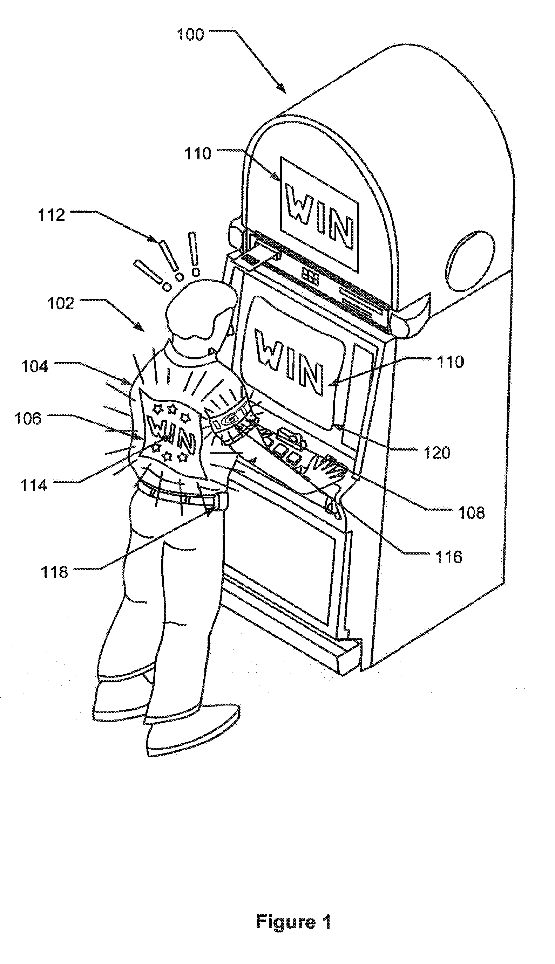

Fig. 1 is a depiction of gaming machine 100 and example wearable display system 104 worn by player 102 of gaming machine 100. Player 102 may wear wearable display system 104 comprising a shirt that features one or more integrated wearable display devices. Player 102 may play a wagering game on gaming machine 100 and experience game winning event 110. Here, player 102 is very excited, a condition indicated in Fig. 1 by the presence of large, symbolic exclamation points 112 above player 102's head. Player 102's excitement 112 may be enhanced by wearable display system 104, which, in this example, is comprised of two separate wearable display devices 106 and 108.

First wearable display device 106 is located on player 102's shirt and consists of a display area capable of displaying animated, multicolor, pixelated images. Second wearable display device 108 is located on a band that the player wears on his arm; the arm band features a smaller display area capable of displaying an animated, multicolor, pixelated image. Wearable display devices 106 and 108 are made of a flexible material conducive to being comfortably worn by game players. While wearable display devices 106 and 108 are depicted as being rectangular in shape, other shapes for wearable display devices are possible and contemplated.

In some embodiments, wearable display devices 106 and 108 may be powered by common module 118. Common module 118 may, for example, be located on player 102's waist. Common module 118 may contain a power source for wearable display devices 106 and 108. Common module 118 may also contain wearable display device controllers for wearable display devices 106 and 108, as well as a portable player tracking device that may be in communication with the wearable display device controllers as well as gaming machine 100 and input controls which may receive input from player 102. Wearable display device controllers may also be located elsewhere, such as on or in the vicinity of a wearable display device, in a separate module, in a gaming machine, a bank switch, or integrated with an article of clothing. The portable player tracking device may be integrated into common module 118 or may be separate from common module 118. The portable player tracking device may not, in some cases, exist as a distinct component but the portable player tracking device functionality may instead be integrated with other components of the wearable display system. Alternatively, the wearable display system may be implemented absent the portable player tracking device.

When gaming machine 100 registers winning event 110, gaming machine 100 may send instructions to the wearable display device controllers via the portable player tracking device or other devices to cause wearable display system 104 to produce visual content 114 reflecting player 102's winning event 110. In this example, content 114 reflecting player 102's winning event 110 consists of the word "WIN" and a circle of stars that may rotate about the word "WIN". Armband wearable display device 108 in this example system may be configured to display team winning content 116 by cycling the letters "IGT", which is the player's team affiliation, through a spectrum of colors to indicate that an IGT team member has experienced winning game event 110. Wearable display system 104 may also display content reflecting other events during play of the game, display other types of content, or be used in other ways described later in this application.

System Description

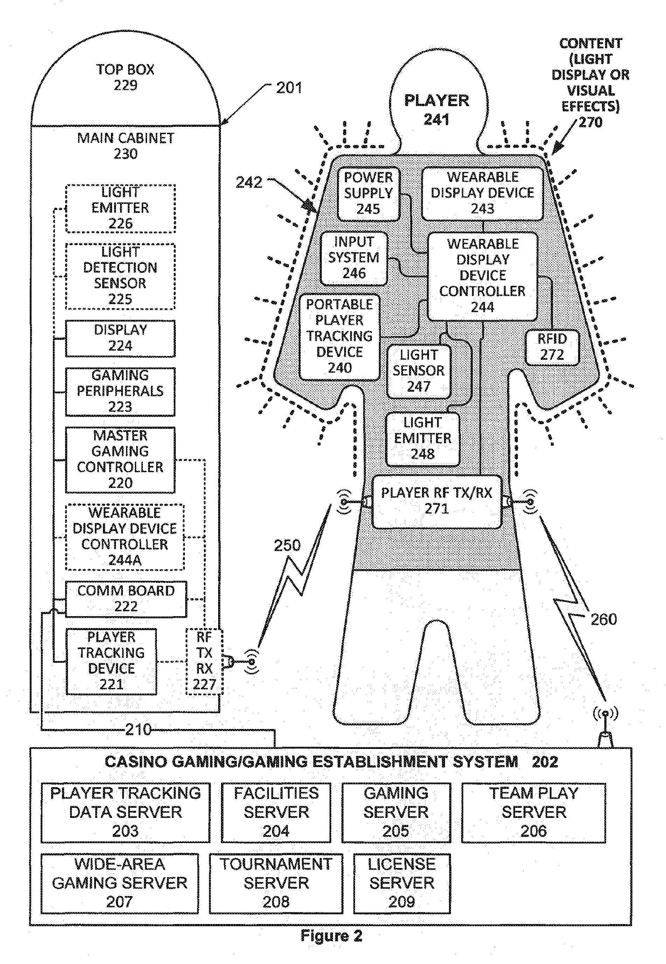

Fig. 2 is an example schematic diagram of a gaming system featuring a wearable display system 242. As shown in Fig. 2, the gaming system may include a gaming machine 201 coupled to a casino gaming or gaming establishment system 202. Casino gaming or gaming establishment system 202 may include, but is not required to include, a player tracking server 203, a facilities server 204, a gaming server 205, a team play server 206, a wide-area gaming server 207, a tournament server 208, and/or a license server 209. The player tracking server 203 may monitor player location, game play behavior, credit input, win history, and other player-associated data. Player tracking server 203 may be connected with or part of a player tracking system. The facilities server 204 may monitor and respond to facilities issues, such as dining reservations or service requests supplied to the facilities server by gaming establishment facilities. The gaming server 205 may manage games available in the casino, provide gaming content, enable display content, provide bonus games, provide game outcomes, and so forth. The team play server 206 may manage teams of players, track data related to such teams, and manage team events. The wide-area gaming server 207 may track wide-area games, games not necessarily involving gaming machines, and other wide-area activities. The tournament server 208 may manage tournaments, track tournament data, and so forth. The license server 209 may manage license data for wagering games, media content, and other products. These servers may be implemented on separate machines, distributed across multiple machines, or may be combined into consolidated machines. The server functionality may also be spread amongst several machines and/or locations. There may be additional functionality in addition to the above-named functions. Gaming machine 201 may be in communication with the casino gaming or gaming establishment system 202 via a network connection 210. Network connection 210 may be established by wired, wireless, optical, or by other communication modes.

Gaming machine 201 may contain a master gaming controller 220, a player tracking device 221, a communications board 222, one or more gaming peripherals 223, and/or a display 224; such components may be housed in main cabinet 230. Gaming machine 201 may also contain a wearable display device controller or a portion of a wearable display device controller 244A. Gaming machine 201 may also contain light detection sensor 225 and/or light emitter 226. Gaming machine 201 may also include radio frequency transmitter and/or receiver (RF TX/RX) system 227. RF TX/RX system 227 may be configured to communicate with player tracking device 221, communications board 222, master gaming controller 220, wearable display device controller 244A, or with other components of gaming machine 201. RF TX/RX system 227 may further be configured to communicate via communication connection 250 with elements of wearable display system 242, such as player RF TX/RX system 271. A top box 229 may also be connected to gaming machine 201. Gaming peripherals 223 may include button panels, light displays, secondary displays, bill validators, ticket printers, token acceptors, token dispensers, etc. Communications board 222 allows for communication 210 between gaming machine 201 and casino gaming or gaming establishment system 202, although such communications may be accomplished by other technologies, such as network controllers embedded within other components in the gaming machine 201. If communications are accomplished without communications board 222, communications board 222 may not be required. Gaming machine 201 may include one or more displays 224. Display 224 may be configured to communicate gaming content to player 241. Such content may include images or representations of cards, reels, dice, race participants, bingo cards, tiles, wheels, bonus games, and/or other imagery associated with casino games. The content may also include images, animations, or text representing events associated with gaming machines, such as jackpot, bonus game, or other game play events. Display 224 may also be configured to present account or other information to player 241, such as credits remaining, player 241's account information, a clock, multimedia entertainment, etc. Gaming machine 201 may not possess all of the components depicted in Fig. 2. Alternatively, the components of gaming machine 201 may be integrated with each other or connected differently than shown in Fig. 2. It is to be understood that such alternative embodiments of gaming machines are contemplated as being within the scope of the invention.

Player tracking device 221 may include a capability to communicate with portable player tracking device 240. Such communication capability may be through communication connection 250 using RF TX/RX system 227, light detection sensor 225 and/or light emitter 226, or through some other communication technology not shown. The communication capability may be integrated into player tracking device 221 or may be operatively connected to player tracking device 221. Player tracking device 221 may include a capability to communicate with wearable display system 242 without the need for portable player tracking device 240. Player tracking device 221 may utilize wireless or non-wireless technologies to communicate, although wireless technologies are preferable. The wireless technologies may comprise infrared (IR) (as an example of light emitter 226 and light detection sensor 225), Bluetooth (as an example of RF TX/RX system 227), or other wireless technologies. Non-wireless technologies may include direct electrical connection via a connector or conductor-to-conductor contact without a connector, such as electrical signal transmission using human skin as a transmission medium for low-frequency electromagnetic signals. Player tracking device 221 may be configured to communicate with a player tracking system. The player tracking system may be part of casino gaming or gaming establishment system 202 and incorporate player tracking server 203. The player tracking system may be configured to communicate with a plurality of player tracking devices 221, each in a different gaming machine 201. The player tracking system may also be configured to communicate directly with portable player tracking devices 240 or wearable display system 242.

Player 241 may be equipped with wearable display system 242. Wearable display system 242 may include wearable display device 243 that may connect with wearable display device controller 244. Wearable display device controller 244 may be configured to control content 270 displayed by wearable display device 243. Wearable display device controller 244 may also be connected to power supply 245, input device 246, RFID unit 272, light sensor 247, light emitter 248, player RF TX/RX system 271, and/or portable player tracking device 240. Such components, depending on the embodiment, may be connected with each other, may not be connected to the wearable display device controller, or may not be connected with any of the other components. Some of the components depicted in Fig. 2 may be omitted in some embodiments of the invention. For example, RFID unit 272 or portable player tracking device 240 may be unnecessary in some implementations of wearable display system 242 and may therefore be omitted. Components depicted in Fig. 2 may exist as discrete components or be integrated with each other or with other components not shown.

Wearable display device controller 244 may also be configured to communicate 250, 260 with gaming machine 201 or casino gaming or gaming establishment system 202. Such communication 250, 260 may be accomplished via wired technologies, such as a cable, or via wireless technologies, such as RF or IR transmitters and receivers. Light sensor 247 and light emitter 248 may be utilized to implement such wireless communication. Light emitter 248 may be incorporated into wearable display device 243. For example, wearable display device 243 may include one or more pixels or light-emitting areas that are configured to transmit light detectable by light detection sensor 225 for communication purposes rather than, or in addition to, display purposes. Player RF TX/RX system 271 may alternatively or additionally be utilized to implement such wireless communication. Light sensor 247, light emitter 248, player RF TX/RX system 271, or other communication technologies may be integrated with other components in wearable display system 242, may be discrete components within wearable display system 242, or may be separate but connected with wearable display system 242.

Wearable display device controller 244 may be connected to wearable display device 243 and configured to control wearable display device 243. Wearable display device controller 244 may provide commands, electrical impulses, and other inputs to wearable display device 243 necessary for wearable display device 243 to function. Wearable display device controller 244 may serve as an interface between other systems, such as communications, input, and power systems, and wearable display device 243. Wearable display device controller 244 may include one or more processors configured to facilitate control of wearable display device 243, as well as memory for storing operating code for wearable display device controller 244 and wearable display device 243.

Wearable display device controller 244 may also be configured to include two or more discrete portions. In such an implementation, one portion of wearable display device controller 244 may be associated with wearable display system 242 and the second portion of wearable display device controller 244 may be associated with gaming machine 201, with a bank switch, or with some other device associated with a casino. For example, the second portion of wearable display device controller 244 may be associated with gaming machine 201 as depicted by wearable display device controller 244A. The two or more discrete portions of wearable display device controller 244 may be in communication via communication connections 250, 260, or other suitable communication technologies.

Wearable display system 242 may include RFID unit 272. RFID unit 272, while shown connected to wearable display device controller 244, may be connected to other components in wearable display system 242, such as portable player tracking device 240. RFID unit 272 may also be independent of other components in wearable display system 242. A particular RFID unit 272 may be associated with a particular wearable display system and/or player for identification purposes. For example, RFID unit 272 may consist of an RFID tag with a unique serial number. Wearable display system 242 may also be provided with a unique serial number or other identifier suitable for identifying wearable display system 242; such a serial number or identifier may be associated with a particular wearable display system and/or player for identification purposes. Such associations may be stored and managed by player tracking server 203, facilities server 204, wide-area gaming server 207, or other appropriate infrastructure system. RFID unit 272 may also, however, be capable of reading RFID tags in some embodiments.

Power supply 245 may supply power to components of wearable display system 242. Power from power supply 245 may be routed through a single component, such as wearable display device controller 244, individually routed to each powered component, or some combination of the two. Some components may not require connection to power supply 245. For example, if RFID unit 272 is a passive RFID unit which is powered by receiving radio signals, RFID unit 272 may not require a connection to power supply 245.

Input system 246 may provide inputs to wearable display device controller 244. Input system 246 may include equipment for providing inputs directly, such as buttons, touch screens, or other input devices. Input system 246 may also or alternatively include equipment for connecting with another device capable of receiving input, such as a Bluetooth-equipped cell phone or other such device. Input system 246 may also or alternatively include equipment for transferring data to wearable display system 242, such as a USB port, an SD-card slot, or other data transfer interface.

Wearable display systems provide an alternate and/or supplemental display to the traditional embedded display devices used in casino gaming machines. Wearable display systems, for example, can be in the form of garments, articles of clothing, or fashion accessories.

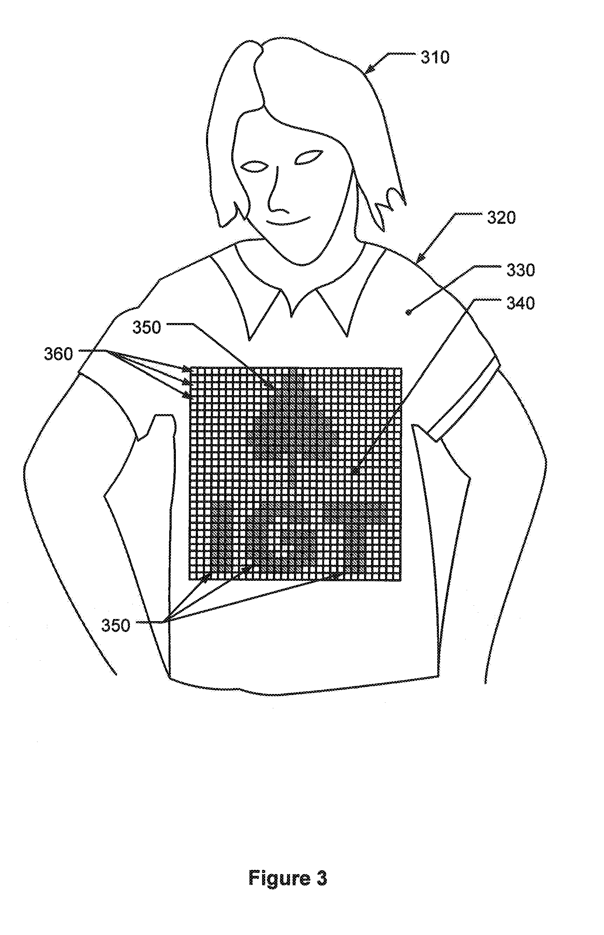

Figure 3 shows an example wearable display system 330 featuring a wearable display device 340 that has been integrated into a polo shirt 320 worn by a player 310. Wearable display device 340 may consist of a flexible display area comprising an array of pixels 360 (wearable display system 330 in Figure 3, for example, features a 900 pixel wearable display device, although only three of the pixels 360 are expressly indicated); each pixel 360 on wearable display device 340 may be equipped with a red, blue, and green light-emitting diode (LED). Alternatively, each pixel may be divided into multiple subpixels, each subpixel displaying a different color or shade of color through various devices, such as an LED or other light-emitting element or a reflective device capable of reflecting ambient light at a desired wavelength. By varying the intensity of light emitted from the LEDs in each pixel 360, wearable display device 340 may be able to produce colors throughout the visible spectrum. Each pixel 360 may be equipped with a single, monochrome LED for monochrome display capability. Alternatively, each pixel 360 may be equipped with a single LED capable of multi-chromatic output for producing color content. While LEDs are discussed in the above embodiments, other suitable devices, such as, but not limited to, a flexible PLED display, electroluminescent (EL) threads, a flexible interferometric modulator display, or other flexible display technology, of producing color or light may be used in fashioning a wearable display device, as discussed later.

The wearable display device 340 in Figure 3 may be configured to display content 350 indicating the player 310's team affiliation, which is with team IGT, and the team logo, which is a playing card spade symbol. Such content 350 may be changed to reflect different team names or symbols, as well as to include animated displays, colors, or other types of content, such as winning event displays, help icons, drink request icons, mood indicators, and so forth. The content displayed may typically be provided by the gaming machine that the wearable display device may be in communication with via the wearable device controller, but such content may be provided through other sources as well, such as in response to the player's input or in response to messages received from a casino gaming or gaming establishment system.

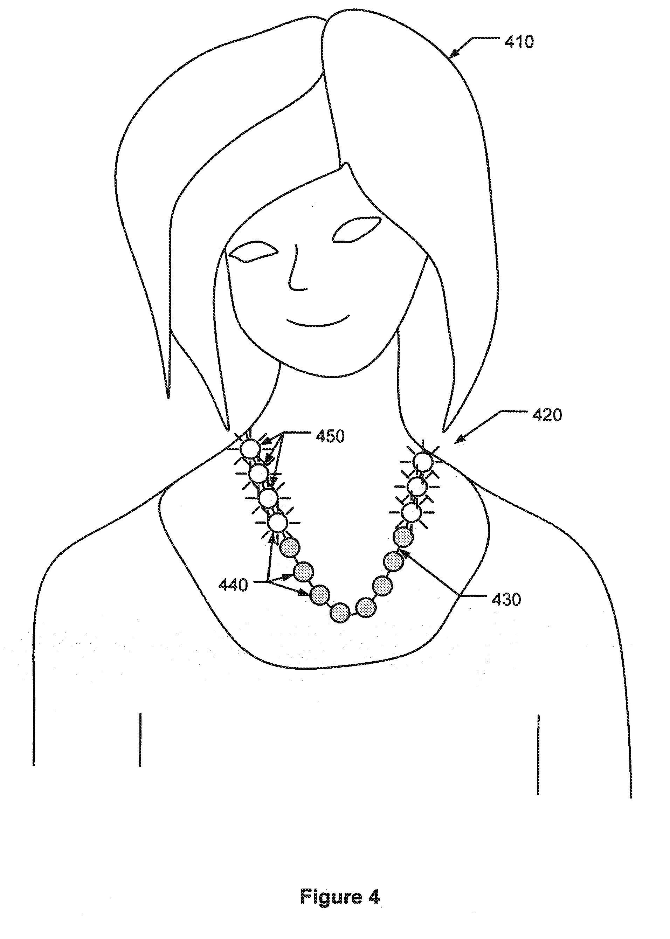

Figure 4 presents an example wearable display system 420 in the form of a fashion accessory worn by player 410, specifically, necklace 430. The wearable display devices in this case consist of "jewels" 440 on the necklace 430 which are capable of individual and controlled illumination. Jewels 440 feature triplets of miniature LEDs—one each of the colors red, blue, and green. As with pixels 360 in the polo shirt depicted in Figure 3, jewels 440 in necklace 430 are each capable of individual illumination 450 in a desired color by varying the intensity of illumination for each LED in each jewel 440.

For example, necklace 430 may be made to light up each jewel 440 in sequence and in rapid succession, giving the impression that player 410 has a brightly glowing orb of light circling around their neck at high speed. If the player 410 wins, the colors displayed by jewels 440 may be cycled through the colors of the rainbow and then all turn a golden hue. A gaming machine may, for example, trigger such a display to symbolize the "pot of gold" at the end of the "rainbow" that player 410 may have just figuratively won on the gaming machine. Such a rainbow effect may involve displaying a rainbow that arcs "out" of a gaming machine display towards player 410 and then causing necklace 430 to illuminate with a golden hue after the rainbow has arced "out" of the display.

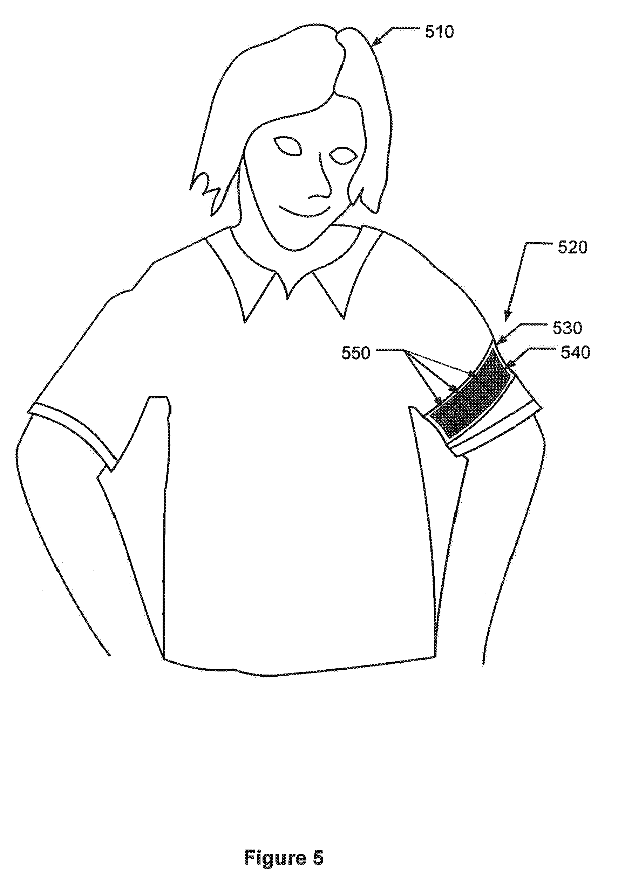

Figure 5 presents another example wearable display system 520 in the form of a fashion accessory worn by a player 510, specifically, an armband marquee display. The armband 530 may consist of a partially elastic material integrated with a flexible wearable display device 540. Flexible wearable display device 540 may, for example, be a polymeric OLED display. Wearable display system 520 is capable of producing content 550 including animated color images. In this particular example, wearable display system 520 has been configured to display the letters "IGT", which represents the team that player 510 is a member of.

The wearable display systems depicted in Figures 3-5 are not intended to be limiting examples of wearable display systems, but rather example systems that illustrate just some of the variety of different forms that such wearable display systems may take. Wearable display systems may include wearable display devices integrated into any form of garment, including, but not limited to, pants, shirts, blouses, skirts, jackets, caps, hats, socks, sandals, shoes, gloves, stockings, and so forth. Wearable display systems may also include wearable display devices integrated into any type of fashion accessory, including, but not limited to, scarves, boas, armbands, belts, bracelets, watches, glasses, shades, monocles, tiaras, crowns, headbands, earrings (piercing and non-piercing), other piercing jewelry, necklaces, charms, patches, brooches, badges, pins, rings, purses, handbags, and so forth.

Wearable Display Device Display Technologies

The wearable display system may incorporate a wearable display device or devices selected from a variety of different display technologies. The ultimate technology incorporated is dependent on the desired display capability, the ability of the underlying wearable item to be integrated with the display technology, the cost of the system, and other factors.

A wearable display system in the form of a brooch, for example, may consist of a small array of LEDs or a small LCD, OLED, or other display. A wearable display system in the form of a necklace, such as that depicted in Figure 4, may feature a string of illuminable "jewels" capable of producing different colors and animated effects. Such a wearable display system may also feature one or more electroluminescent wires to string the jewels together and provide a further lighting effect.

A wearable display system in the form of a shirt, for example, may consist of a large and flexible array of LEDs, a flexible PLED display, electroluminescent (EL) threads, a flexible interferometric modulator display, or other flexible display technology. Controls or user input capabilities may be integrated into the cloth or material used to manufacture the wearable display system. The components used to produce the display may emit light, such as LEDs, OLEDs, PLEDS, etc. The components used may also emit no light, but be reflective displays capable of changing color or contrast and relying on ambient light for illumination, such as ePaper, MEMS displays, etc.

The display may comprise a pixel or other area capable of being switched between a first state and a second state. The display pixel may be capable of retaining its state if power is removed. There may be multiple such pixels present in a wearable display device. Use of such a bi-state display technology may allow for continued display of content by the wearable display system even if the wearable display system loses power. Examples of such displays include electrophoretic displays, cholisteric LCDs, interferometric modulator displays, electrochromic displays, electrofluidic displays, etc.

A more advanced display may include a large grid or array of pixels or switchable areas configured to produce moving images utilizing a wide variety of colors and mounted to a flexible surface. The Lumalive™ system is one example of such an advanced display and is capable of producing an animated 14x14 pixel color image.

The display may utilize discrete elements assembled into a display configuration. For example, discrete LEDs may be arranged in a grid, as in the Lumalive™ system. The LEDs may be configured to provide a monochromatic display. Alternatively, multiple LEDs of different colors may be used to in each cell of a grid to allow for a dichromatic or trichromatic display effect. In another alternative, an individual LED capable of a range of color output may be used in each cell of a grid to provide for a dichromatic or trichromatic display. An LED wearable display device may be manufactured using surface-mount technology utilizing rigid or flexible substrate materials or may feature LEDs connected to a flexible wiring harness. Of course, other technologies besides LEDs may be used for each pixel element, including incandescent lights, liquid crystal display technology, organic LEDs, etc.

The display elements need not be arranged in a grid or be rectangular. They may also consist of lines, shapes, or patterns on the wearable display system. However, the use of a pixelated display allows for greater flexibility in terms of the content depicted since shapes, lines, or patterns can be reproduced on such a display.

Additional color elements may be added as needed to produce tetrachromatic or higher color displays. Although most humans are only capable of perceiving trichromatically, the display may still use tetrachromacy to facilitate communication. For example, a tetrachromatic display may include the ability to output ultraviolet or infrared light, neither of which is typically visible to humans but which are both readily detectable using machine vision. This may facilitate wireless communication. Additional colors may also be used to provide a higher-quality image in the visual spectrum. For example, Sharp Quattron LCD technology utilizes the standard red, blue, and green illumination elements presents on most LCD televisions and adds a fourth color, yellow, for enhanced picture quality.

The display may utilize a technology such as flexible OLEDs, flexible LCDs, flexible cholesteric LCDs, or other flexible display technologies. Rigid displays featuring such technologies may also be used in appropriate cases. In some cases, a projector-based display device may be used, such as a pico-projector. If a projector-based display is used, it may be configured to project content onto a surface separate from the wearable display system rather than display the content on the wearable display system. For example, a pico-projector may be configured to project content onto the floor or ceiling around a player.

Wearable Display System Content

Content displayed by wearable display devices may involve lighting effects, raster-based graphics, vector-based graphics, animations, live-action or motion video, still images, or other media. The content displayed may be monochromatic, of a limited chromatic range, encompass the entire visual spectrum, and/or include non-visual color spectrum material.

As described previously, the wearable display system may be configured to display content relating to play of a casino game on a gaming machine or casino gaming system. The wearable display system may also display content relating to team play in a casino. The wearable display system may also display content that is not related to play of a game. Such content display may be implemented according to commands received from a gaming machine or a casino gaming or gaming establishment system.

Commands to the wearable display system may be communicated via any suitable communications device, such as the communications paths indicated in Fig. 2. For example, commands may be sent via communication connection 250 from a transmitter associated with a master gaming controller 220, player tracking device 221, or communications board 222 of a gaming machine 201, or via communication connection 260 from a transmitter associated with a casino gaming or gaming establishment system 202. If the wearable display device controller consists of two physically separate portions, such as indicated by wearable display device controllers 244 and 244A, commands may be wirelessly transmitted between the two portions using transmitters and receivers associated with each portion.

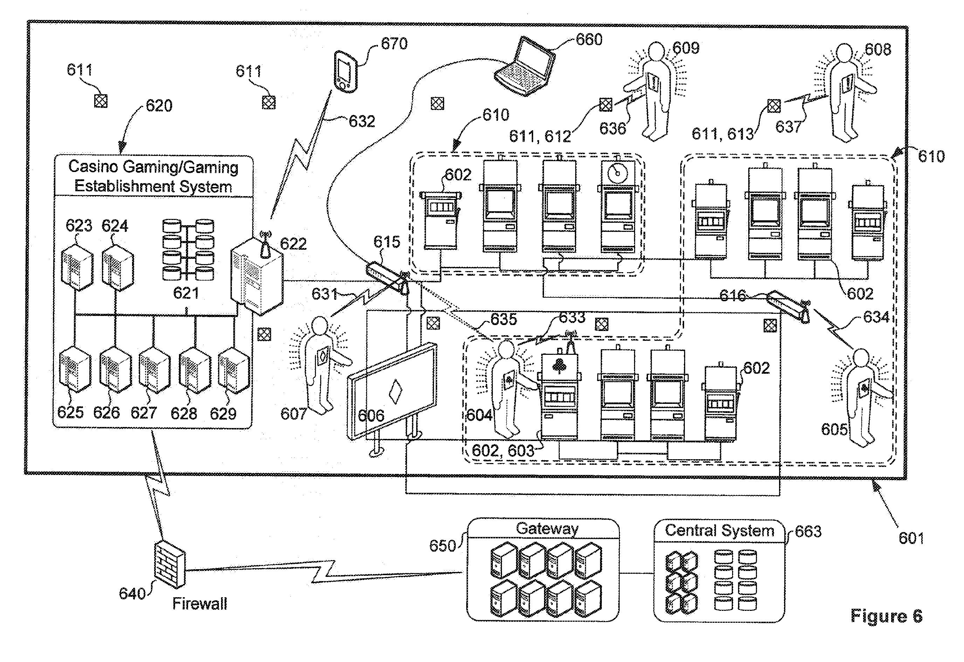

Commands may be communicated via connections shown in Fig. 6. For example, the communication connection 260 may include communications between a wearable display system, such as that worn by players 604, 605, and 607, and bank switches 615 and 616. Fig. 6 is described more fully later in this application. Of course, many other connection technologies, such as wired connections or connections routed through various network components, may be used to communicate the commands and are contemplated as being suitable for implementation with a wearable display system.

Commands regarding content related to team play may be generated and transmitted by the casino gaming or gaming establishment system 202, or by gaming machine 201. For example, team play server 206 may determine that a player is part of a team which has just had a different team member experience a winning event. Team play server 206 may then communicate commands for the wearable display system 242 to display team win content, via communication connection 260, to wearable display system 242. Alternatively, master gaming controller 220 may determine that a different team member has experienced a winning event and communicate commands for the wearable display system 242 to display team win content, via communication connection 250, with wearable display system 242.

The content may be displayed responsive to commands from the gaming machine or casino gaming system. Such commands may take advantage of built-in display routines accessible by the wearable display device controller or may consist of custom routines directed by the gaming machine. For example, a gaming machine may send a command to the wearable display system to display the content "WIN" rather than attempting to instruct the wearable display system which individual pixels to illuminate to produce the text "WIN". This may allow the command to be small from a message size perspective and capable of quick transmission, which would be a concern if the communication link between a gaming machine or casino gaming system and a wearable display system has a low bandwidth.

Alternatively, or additionally, the gaming machine may download new routines into the wearable display system for later use via communication connection 250. This may allow the wearable display system to utilize complex display routines that, were the routines to be downloaded from the gaming machine when a triggering event occurred, may not be capable of being displayed until well after the triggering event has passed by. By downloading the routines into the wearable display system in advance, the gaming machine need only send a short command to initiate a such a display routine.

The wearable display system may be configured to display default content when the wearable display system is not displaying content at the active direction of a gaming machine or casino gaming system. In some embodiments, the default content may be established by the wearer of the wearable display system or by a gaming machine or casino gaming system. Such content may be provided to the wearable display system via communications with the gaming machine or casino gaming system, such as via communications connections 250 or 260. The content may alternatively be provided to the wearable display system via an input by a wearer of the wearable display system, for example, via input system 246.

Content for the wearable display system may also be provided by connecting the wearable display system with a portable storage medium, such as an SD card, micro-SD card, flash memory, or other storage device. Interfaces for such content input may be located in input system 246, or may be located elsewhere and equipped with a device for communicating the content to the wearable display system 242, such as wireless transmission devices 250 or 260. Content display may also be directed via commands received from input system 246. Further capabilities of input system 246 are described elsewhere in this application.

The wearable display system may display content that is not related to play of a casino game. Such content may include animated or still image displays communicating a need for assistance or help, a desire to order drinks or refreshment, a desire for companionship, a general mood, and so forth. Commands for displaying such content may be given via input system 246 or by input to a gaming machine which then communicates the commands via communications connection 250. It may also include other content that a wearer of the wearable display system may wish to display when the wearable display system is not displaying game-related content. Such content may include the team logo of the wearer's favorite sports team, artwork, slogans, or other images or animations of interest to the wearer. The content may include advertisements for services or products. Such advertisements may include advertisements for casino products and services, casino games, shows, restaurants, clubs, bars, or upcoming events.

If a wearable display system is equipped with or in communication with a location determination technology, such as described in Fig. 6 with reference to RFID devices 611-613, or it is otherwise possible to determine the approximate location of a wearable display system, the wearable display system may be configured to display advertising content that is targeted for display within certain areas and at certain times. For example, a wearable display system may be configured to display advertisements for a sports viewing party to be held at a sports bar in a casino when the wearable display system is within 200 ft of the sports bar and from noon until 9:00 pm on the day of the sports viewing party. Instructions for such content display may be pre-loaded into a wearable display system or given via communications connections such as 250 or 260.

The wearable display system may be configured to allow the wearer of the wearable display system to display previously-presented content at a time of the wearer's choosing. For example, if a player's wearable display system is used by a casino gaming machine to display particular content in response to a winning event on the gaming machine, the player may wish to retain the ability to display this content at a later time. This would allow the player to keep a souvenir of their win for later display to friends and family or for personal reminiscing.

The wearable display system may also be used to allow players who enjoy collecting to collect content from casino gaming machines—a player may try to form complete collections of content from a casino, a particular series of gaming machine, or any other grouping of gaming machines. Such content may also be collected from non-gaming machine sources, such as via the wide-area games described later in this application or via non-gaming sources. Players who successfully complete a collection may be rewarded with new content, prizes, or other awards. The collection of content may be automatic or user-directed. Collected content may be downloaded to a wearable display system either directly via input system 246 or downloaded via communications connections, such as 250 or 260. Content may be stored on a memory associated with the wearable display system.

The content may feature digital rights management or other safeguards to ensure against unauthorized reproduction. The collected content may also be registered in a central database, such one managed, for example, by player tracking data server 203, to allow for replacement of collected content in the event of an erasure or failure of the wearable display system. Registration in a central database may also allow a claimed complete collection to be verified by comparing the claimed collection to casino records of which elements of a collection have actually been collected. Such verification may be facilitated by communications connections 250 or 260.

Content may also be collected by devices separate from the wearable display system. For example, a player may receive a printed voucher from a gaming machine that can be used to retrieve content associated with the gaming machine from a retrieval station at a later date. The retrieval may be facilitated by taking the voucher to a kiosk or gaming machine equipped with a voucher reader and a device for communicating with the wearable display system, such as via communications connections 250, 260, or similar connections. The voucher may contain information that allows for the content to be retrieved from a remote location or may encode information necessary to replicate the content directly on or in the voucher. Another technology for collecting content may involve the use of radio-frequency identification (RFID) tokens. A limited-range RFID tag may be embedded within a casino chip of some type. The wearable display system may be connected to an RFID reader, such as RFID unit 272. The RFID tag may contain instructions that cause the wearable display system to display particular content. This method allows the player to replicate their collected display routines and be able to physically display the extent of their collection via their tokens. The RFID tag may also be used with a kiosk in much the same manner as a printed voucher.

The wearable display system may also allow a player to augment content displayed at the direction of a casino gaming system or gaming machine with player-specified content, such as a nickname, avatar, or other image, text, or animation. Such content may be input via a kiosk capable of communicating with a wearable display system, input system 246, or other suitable technology. Such content may be communicated to the wearable display system via communications connections 250 or 260. Similarly, the wearable display system may allow a casino or gaming establishment to augment content shown on the wearable display device with special indicators demonstrating an elevated or elite status of the wearer of the wearable display system. Such status may be determined by referencing player data maintained by player tracking data server 203.

Additionally, the content may be configured to indicate which player's turn it is in a multi-player game. For example, in a poker game, each player takes turns betting against their hand. A player's wearable display system may be illuminated when it is their turn to bet, as tracked by a live host or casino gaming or gaming establishment system, for example, by gaming server 205, thus providing the player an indicator that they must either bet or fold. The wearable display system may be instructed to display such content over communications connections 250 or 260. In games where each player has a certain amount of time within which to complete their turn, the wearable display system may be configured to display a count-down timer of sorts. For example, at the beginning of the turn, the full display area of the wearable display system may be illuminated. Portions of the display area may be turned off or dimmed in step with the count-down of the turn timer. When the wearable display system is completely dark, the player's turn would be over.

Team content, as discussed earlier, may consist of winning event content signaling that a team member has experienced a game winning event. Other forms of team content are also envisioned. For example, team play server 206, master gaming controller 220, or another system may monitor various aspects of team play and provide instructions to wearable display system 242 via communications connections 250, 260, or another connection to display content reflecting a team ranking, team logos, team member names, overall team score, and other team-related information.

Coordinated Content

Content displayed on a wearable display system may be coordinated with the display of content on a gaming machine or other casino display. Several examples of such coordination are discussed below with respect to the example wearable display system depicted in Figure 1. Coordinated content display is facilitated by bi-directional communications between wearable display system 104 and gaming machine 100 or other casino display.

Content display via wearable display system 104 can be coordinated with the display of content on gaming machine 100. Such coordinated content may be configured to produce a display of content that "spans" between gaming machine display 120 and wearable display system 104. For example, display 120 may display an animation of coins being dispensed and bouncing out towards player 102. Such animations seek to re-create the excitement of winning a large coin jackpot on older machines where a large volume of physical coins is actually dispensed and often overflows the coin hopper associated with the older machine. The coin-dispensing animation can be made much more exciting for player 102 if wearable display system 104 displays animated content coordinated with the coin-dispensing animation shown on display 120, such as content depicting that player 102's shirt is "filling up" with the dispensed coins, or that the coins are bouncing "through" or "into" player 102.

Another example of such coordinated content may include a wild-west, mafia, military, or other-themed casino game which presents a "shoot-out" mode as part of a game display. In the shoot-out mode, player 102 is presented with an animation of a nemesis on display 120; the animation may show the nemesis drawing a weapon and shooting at player during game play. If player 102 "loses" during the shoot-out mode, wearable display system 104 may depict bullet-hole animations on wearable display device 106 or another wearable display device associated with wearable display system 104. If player 102 "wins" during the shoot-out mode, wearable display system 104 may depict bullets hitting player 102 and then falling off, as if stopped by a bullet-proof vest worn by player 102.

A third example of coordinated content display may involve displaying content on display 120 or gaming machine 100 that involves flashing, pulsating, strobing, or changing the colors of display elements or lights. Wearable display system 104 may display content that also involves flashing, pulsating, strobing, or changing the colors of display elements. The timing of the flashing, pulsating, strobing, or changing the colors of content displayed on wearable display system 104 may be synchronized with the flashing, pulsating, strobing, or changing the colors of content displayed on display 120 or other illumination sources on gaming machine 100. Alternatively, the timing may be adjusted to give the impression that light or color is traveling from display 120 to wearable display system 104 or vice versa. Synchronization may also be implemented using image content or animation content, wherein images or animations are displayed on the wearable display system 104 and the display 120 in synchronicity.

A fourth example of coordinated content display may involve a slot-machine type casino game. Display 120 may display a plurality of slot reels. Display 120 may depict the slot reels in motion and then each slot reel coming to rest. Wearable display system 104 may display each reel before it comes to rest, mirroring portions of what display 120 is depicting. Alternatively, wearable display system 104 may actually depict a different area of the reel than is depicted on display 120, such as an area depicting an upcoming symbol. Such a "sneak preview" adds to player excitement since player 102 may see a high-value symbol approaching and anticipate a larger win. The preview may also be shown on a portion of wearable display system 104 that is not readily observable by player 102. While the preview may not be visible to player 102 when depicted in this way, bystanders may see the preview depicted by wearable display system 104 and react with expressions of anticipation and empathy that may boost player 102's excitement.

A fifth example of coordinated content display may involve displaying content on wearable display device 104 that is thematically related to content displayed on display 120. For example, gaming machine 100 may be configured to present a game with a Chinese or East Asian theme (such as "Ancient Chinese Secret™" offered by IGT). Gaming machine 100 may, in accordance with this example theme, display graphics such as Chinese characters, Chinese dragons, Chinese coins, etc. Wearable display system 104 may display content that may be thematically related, such as panda bears, lotus flowers, or the Great Wall of China. It is not necessary that the thematically related content displayed on wearable display system 104 also be displayed on display 120 of gaming machine 100. One advantage to such coordinated content display is that player 102 or other observers may experience enhanced excitement 112 through perceiving content on wearable display device 104 which is not displayed on display 120 of gaming machine 100 but which is thematically related to content displayed on display 120. This gives player 102 the sense that they have discovered or unlocked something extra in the gaming experience.

A sixth example of coordinated content display may involve the wearable display system functioning as a bonus game or enhancement to a main game. For example, player 102 may, by playing gaming machine 100 while wearing wearable display system 104, cause gaming machine 100 to enable a special bonus feature only accessible to players wearing wearable display system 104. Such a bonus feature may consist of an animation of a bonus wheel that is spun after a result of a main game is reached on the gaming machine. The animation of the bonus wheel may be displayed on wearable display system 104. Depending on the outcome of the bonus wheel spin, player 102 may receive a bonus award or multiplier affecting their winnings in the main game. Player 102 may not be eligible to play the bonus wheel game unless player 102 is wearing wearable display system 104.

There are many other ways of presenting coordinated content display between a gaming machine and a wearable display system. The embodiments described above represent just some of the ways in which coordinated content may be provided using a wearable display system and should not be viewed as limiting or bounding the concept of coordinated content display using a wearable display system.

Integration into Casino Gaming or Gaming Establishment System

One example of a casino gaming or gaming establishment system 620 suitable for implementing some aspects of the embodiments described herein is shown in Fig. 6. Those of skill in the art will realize that this example architecture and the related functionality are merely examples and that the present invention encompasses many other such embodiments and methods. Here, for example, a single gaming establishment 601 is illustrated, which is a casino in this example. However, it should be understood that some implementations of the present invention may involve multiple gaming establishments.

Gaming establishment 601 includes twelve gaming machines 602, each of which is part of a bank 610 of gaming machines 602. It will be appreciated that many gaming establishments include hundreds or even thousands of gaming machines 602, not all of which are included in a bank 610. The present invention may, however, be implemented in gaming establishments having any number of gaming machines. Gaming machines 602 may be connected with casino gaming or gaming establishment system 620. Such connection may be made via an intermediary, such as bank switches 615 and 616.

Casino gaming or gaming establishment system 620 may perform several functions, as represented, for example, by items 203-209 in Fig. 2. These functions may be carried out by a multitude of discrete machines, a server, a rack-mounted server solution, or other conceivable configurations of hardware. In Fig. 6, servers 623-629 provide functionality corresponding with that provided by servers 203-209 in Fig. 2. However, the functionality of the casino gaming or gaming establishment system is not required to be divided amongst several separate servers; it may be a single server or a combination of servers. Additionally, while some or all of the functionality of the casino gaming or gaming establishment system 620 may be located single location, it may also be spread amongst several locations, either in the casino or remote from the casino.

Various alternative network topologies can be used to implement different aspects of the invention and/or to accommodate varying numbers of networked devices. For example, gaming establishments with very large numbers of gaming machines 602 may require multiple instances of some network devices (e.g., of main network device 622, which combines switching and routing functionality in this example) and/or the inclusion of other network devices not shown in Fig. 6. For example, some implementations of the invention may include one or more middleware servers disposed between gaming machines 602 and servers 623-629. Such middleware servers can provide various useful functions, including but not limited to the filtering and/or aggregation of data received from bank switches 615 and 616, from individual gaming machines and from other player terminals. Some implementations of the invention include load balancing methods and devices for managing network traffic.

Each bank 610 has a corresponding bank switch 615 or 616, which may be a conventional bank switch. Bank switches 615 or 616, as shown in Fig. 6, may be linked to wireless access points to facilitate communication with wearable display devices and other portable equipment, such as PDA 670 (although PDA 670 is shown communicating with main network device 622 rather than banks 615 or 616). Each bank switch may be connected to servers 623-629 via main network device 622, which combines switching and routing functionality in this example. Although various floor communication protocols may be used, some preferred implementations use IGT's open, Ethernet-based SuperSAS® protocol, which IGT makes available for downloading without charge. However, other protocols such as Best of Breed ("BOB") may be used to implement various aspects of a casino gaming or gaming establishment system. IGT has also developed a gaming-industry-specific transport layer called CASH that rides on top of TCP/IP and offers additional functionality and security.

Servers 623-629 can be configured to implement, at least in part, various aspects of the present invention. Some preferred embodiments of servers 623-629 include (or are at least in communication with) clustered CPUs, redundant storage devices 621, including backup storage devices, switches, etc. Such storage devices 621 may include a redundant array of inexpensive disks ("RAID"), back-up hard drives and/or tape drives, etc. Some implementations of the invention provide for one or more of servers 623-629. Servers 623-629 may be in the form of blade servers.

In some implementations of the invention, many of these devices (including but not limited to main network device 622) are mounted in a single rack with servers 623-629. Accordingly, many or all such devices will sometimes be referenced in the aggregate as a server. However, in alternative implementations, one or more of these devices is in communication with servers 623-629 but located elsewhere. For example, some of the devices may be mounted in separate racks within casino gaming or gaming establishment system 620 or located elsewhere on the network. For example, it can be advantageous to store large volumes of data elsewhere, such as central system 663, via a storage area network ("SAN").

In some embodiments, these components and servers 623-629 preferably have an uninterruptible power supply ("UPS"). The UPS may be, for example, a rack-mounted UPS module.

Gaming establishment 601 may also have multiple RFID devices 611 installed at various locations. Such RFID devices may be free-standing devices or integrated into casino gaming or gaming establishment system 620. Although RFID devices 611 are not shown as connected with any other components, they may communicate with other components via any suitable communication technology, such as wireless or wired connections. RFID devices 611 may include RFID tags which provide information when interrogated by an RFID reader, RFID readers which interrogate RFID tags and receive information in response to interrogation, or both.

Gaming establishment 601 may have several players wearing wearable display systems interacting with the casino gaming or gaming establishment system or with gaming machines 602. For example, player 604 is playing a game on gaming machine 603. Gaming machine 603 is also an example of gaming machines 602. Player 604's wearable display system may be in communication 633 with gaming machine 603 wirelessly, as shown. Alternatively, player 604's wearable display system may be in communication 635 with the casino gaming or gaming establishment system; this communication may be via gaming machine 603 or it may bypass gaming machine 603, communicating, for example, with bank switch 615 via a wireless access point (WAP) or other wireless technology directly (indicated by the dotted-line lightning bolt). Player 605 is wearing a wearable display system that may be in communication 634 with bank switch 616 via a WAP or other wireless communication technology. Player 605 and player 604 may be on a team together, and player 605's wearable display system may display content similar to that of player 604 when player 604 experiences a game event. Instructions or data pertaining to player 604's game event content display may be communicated from player 604's wearable display system, gaming machine 603, or casino gaming or gaming establishment system 620 to player 605's wearable display system.

Player 607 is wearing a wearable display system in communication with casino gaming or gaming establishment system 620 via bank switch 615. Casino gaming or gaming establishment system 620 is also in communication with casino display 606 via bank switch 615. Player 607's wearable display system is displaying content in concert with the content displayed on casino display 606 at the direction of casino gaming or gaming establishment 620 via commands sent via communication connection 631 with bank switch 615.

Players 608 and 609 are wearing wearable display systems with RFID units, such as RFID unit 272. Player 609's RFID unit 272 may interrogate 636 an RFID tag in RFID device 612. Player 608's RFID unit 272 may interrogate 637 an RFID tag in RFID device 613. Wearable display systems worn by players 608 and 609 may communicate any received RFID tag data from RFID devices 612 and 613 to casino gaming or gaming establishment system 620. Such communication may occur via wireless communication through a bank switch such as bank switch 615 or 616, via wireless communication through a gaming machine 602, via wireless communication with main network device 622, or via any other suitable communication channel. To avoid unnecessary clutter, Fig. 6 does not depict such communications. Casino gaming or gaming establishment system 620 may determine, based on the received RFID tag data, that players 609 and 608 are in close physical proximity based on the locations of RFID devices 612 and 613. For example, facilities server 624 may include a database of all RFID tags associated with all RFID devices 611 in gaming establishment 601 as well as their locations and be configured to determine the physical distance between two RFID device 611 locations, such as between RFID devices 612 and 613. Based on this determination, casino gaming or gaming establishment system 620 may send commands to the wearable display systems of players 608 and 609 to display content indicating the proximity of players 608 and 609 to each other. For example, the wearable display systems for players 608 and 609 may both be commanded to display large exclamation points indicating they are nearby; the degree of proximity may be indicated by the size of the displayed exclamation point.

In another alternative, RFID units 272 may only include RFID tags and RFID devices 612 and 613 may include RFID readers. In this case, player 608 and 609's RFID tags included in RFID unit 272 may be interrogated by the RFID readers included in RFID devices 612 and 613. RFID devices 612 and 613 may then communicate the RFID tag data for players 608 and 609 to casino gaming or gaming establishment system 620. As described above, facilities server 624 may house a database of RFID device 611 locations, which may be used to determine location data. Player tracking server 623 may house a database of RFID tag data for RFID units 272 to that can be used to identify which wearable display system and/or player is associated with the interrogated RFID tags. By combining the data from both systems, casino gaming or gaming establishment system 620 may determine that players 608 and 609 are in close physical proximity to each other and send commands to the wearable display systems worn by players 608 and 609 to display proximity content as outlined above.

Casino gaming or gaming establishment system 620 may include one or more operator consoles or other host devices that are configured for communication with servers 623-629. Such host devices may be provided with software, hardware and/or firmware for implementing various aspects of the invention; many of these aspects involve controlling servers 623-629. However, such host devices need not be located within casino gaming or gaming establishment system 620. Wired host device 660 (which is a laptop computer in this example) and wireless host device 670 (which is a PDA in this example) may be located elsewhere in gaming establishment 601 or at a remote location.

If a host device is located in a remote location, security methods and devices (such as firewall 640, authentication and/or encryption) should be deployed in order to prevent the unauthorized access of the gaming network. Similarly, any other connection between gaming establishment 601 and the outside world should only be made with trusted devices via a secure link, e.g., via a virtual private network ("VPN") tunnel. For example, the illustrated connection between servers 623-629, gateway 650 and central system 663 that may be used for wearable display device content download, etc., is advantageously made via a VPN tunnel.

An Internet-based VPN uses the open, distributed infrastructure of the Internet to transmit data between sites. A VPN may emulate a private IP network over public or shared infrastructures. A VPN that supports only IP traffic is called an IP-VPN. VPNs provide advantages to both the service provider and its customers. For its customers, a VPN can extend the IP capabilities of a corporate site to remote offices and/or users with intranet, extranet, and dial-up services. This connectivity may be achieved at a lower cost to the gaming entity with savings in capital equipment, operations, and services.

There are many ways in which IP VPN services may be implemented, such as, for example, Virtual Leased Lines, Virtual Private Routed Networks, Virtual Private Dial Networks, Virtual Private LAN Segments, etc. Additionally, VPNs may be implemented using a variety of protocols, such as, for example, IP Security (IPSec) Protocol, Layer 602 Tunneling Protocol, Multiprotocol Label Switching (MPLS) Protocol, etc.

For security purposes, any information transmitted to or from a gaming establishment over a public network may be encrypted. In one implementation, the information may be symmetrically encrypted using a symmetric encryption key, where the symmetric encryption key is asymmetrically encrypted using a private key. The public key may be obtained from a remote public key server. The encryption algorithm may reside in processor logic stored on the gaming machine. When a remote server receives a message containing the encrypted data, the symmetric encryption key is decrypted with a private key residing on the remote server and the symmetrically encrypted information sent from the gaming machine is decrypted using the symmetric encryption key. A different symmetric encryption key is used for each transaction where the key is randomly generated. Symmetric encryption and decryption is preferably applied to most information because symmetric encryption algorithms tend to be six hundred to ten thousand times faster than asymmetric encryption algorithms.

Wearable Display System Communications and Input

Multiple wearable display devices or systems may be communicatively connected together wirelessly or via wires and may have a common wearable display device controller. Wearable display devices within a wearable display system may be configured to communicate with each other to coordinate their display routines. For example, a wearable display system such as the shirt shown in Figs. 1 and 3 may have a wearable display device on the front and another wearable display device on the back. These wearable display devices may coordinate animated content display via a communication connection to give an impression that the animated image displayed by the wearable display devices revolves around the torso of the shirt.

Communicatively connected wearable display systems need not be worn by the same individual. For example, for team play, the wearable display systems of each team member may be configured to communicate directly with the wearable display systems of the other team members or with a server, such as team play server 206 depicted in Figure 2, which is in communication with the wearable display systems of the other team members. Direct communication may be accomplished through use of player RF TX/RX system 271, light emitter 248, light sensor 247, or other similar technologies.

In embodiments utilizing light-based communication, communication may involve the use of light in the visible or non-visible electromagnetic spectrum. For example, a pulsed infrared signals may be used to communicate between a wearable display device and another device. While an infrared signal allows for communication unobservable by the naked eye, infrared communications would also require hardware equipped to produce and sense infrared light. Alternate embodiments may include the use of visible light communications. While such communications may use light wavelengths visible to the naked eye, these communications may take the form of a very high-frequency burst transmission which is of such short duration as to be invisible to the naked eye or which appears to consist of a continuously-illuminated light source without information content discernable to the naked eye.

Direct communication between wearable display systems is not limited to wearers of wearable display systems during team play; it can be used in other contexts as well. Server communications may be via communications connections such as 250 or 260; in the case of communication connection 250, such a connection may simply serve as a pass-through, via connection 221, to casino gaming or gaming establishment system 202. If one team member wins a jackpot, all of the team members' wearable display systems may be instructed to produce a "win" display reflecting this accomplishment.

In another example, a team member's shirt may display content indicating that they are in close physical proximity to another team member. As the team member moves closer to or further away from the other team member, the content may change character to reflect the decreased or increased physical separation, perhaps by changing the color of the displayed content, the speed of animated content, or other indicators. Such a capability may involve the use of a location determination technology for determining the positions of both team members, such as that discussed with respect to RFID devices 611-613 of Fig. 6. Such a capability may involve communicating with casino gaming or gaming establishment system 202 in order to obtain location data that such systems may determine. Such a capability may also be implemented through the use of signal strength determination. For example, a wearable display system in communication with another wearable display system via a wireless radio link such as, for example, player RF TX/RX system 271 may measure the signal strength of the wireless radio link. If the signal strength increases, the wearable display system may indicate that the wearer is getting closer to the other wearable display system. If the signal strength decreases, the opposite may be indicated.

The wearable display system may incorporate a power source, such as power supply 245. The power source may take the form of a battery, capattery (capacitive battery), fuel cell, or other power supply. The power source is preferably rechargeable, and charging stations for such power sources may be built into gaming machines, tables, hotel rooms, and other locations in a casino or gaming area. The wearable display system may also utilize inductive power transmission, solar power, thermoelectric power generation utilizing body heat, or electrokinetic power capture to generate power for the display or the battery charging functions.

The wearable display system may also include the capability to receive inputs from the wearer of the wearable display system, for example, by input system 246 in Fig. 2. Such input may be received through a variety of different technologies, including direct touch input, gestures, sound, or through a paired electronic device or a token. Such input may consist of instructions to the wearable display system or of data to be displayed as content by the wearable display system.

Direct touch input may be accomplished by implementing pressure-sensitive regions on the wearable display system. An example of such a "smart fabric interface" can be found in ElekTex™, which is a machine-washable fabric made by Eleksen, owned by Peratech Ltd., that incorporates pressure-sensitive electronics that can convert contact pressure into electronic signals that can be used to provide input to electronic devices. Direct touch input may also be implemented using standard contact, membrane, or capacitive switches or other non-textile-based devices.

Gesture input may be accomplished through the use of accelerometers or other motion sensing technologies. For example, a shirt with an accelerometer sewn into the cuff would be able to detect movement of the player's arm and provide data for detecting arm gestures. In some embodiments, gestures made by the wearer of a wearable display device may be converted into visual output. For example, if the wearer were to swing their arms and generate a detectable acceleration at accelerometers located at their wrists, the wearable display device may be configured to generate light patterns which "flow" down the sleeves of the wearer's wearable display device and towards their hands. In another embodiment, the wearable display device may be configured to vary the frame rate of a displayed animation depending on how energetically the wearer is moving, which may be measured using accelerometers or gyroscopes.

Sound input may be accomplished through the use of a microphone, and may range from simple sound recognition to full speech recognition.

Input via a paired electronic device may be implemented via a number of different technologies, such as a Bluetooth® connection. Such pairing may make us of player RF TX/RX system 271 or light sensor 247 and light emitter 248. A wearer of a wearable display system may pair their cell phone, smartphone, PDA, digital wallet, personal media player, or other electronic device with their wearable display system. An interface application may need to be installed on the electronic device to facilitate communication with the wearable display system. Persons using such a device may be able to interact with their wearable display system to a much higher degree than is possible with other input technologies due to the complex interface technologies these devices often support.

Input via a token may be implemented through the use of printed vouchers, magnetic stripe card, RFID card, or other similar device, such as an RFID-equipped souvenir poker chip. For example, a player may be issued an RFID poker chip pre-loaded with certain content data. The wearable display system may be capable of reading the content data from the RFID card, for example, via RFID unit 272 or player RF TX/RX system 271. The wearable display system may incorporate an RFID reader, a magnetic stripe reader, an optical reader, or other suitable technologies for receiving inputs via a token.

The above input technologies are not intended to be an exclusive list, and it is to be appreciated that the use of other input technologies is contemplated in this invention. Additionally, it is anticipated that there may be combinations of the above input technologies as well as unmentioned input technologies. Such combinations are also contemplated to be in the spirit of this invention.

The wearable display system may also be augmented with the addition of sound-producing technology. Such technology may be used to augment the content displayed on the wearable display system or on a casino gaming machine display. The audio content produced via the sound-producing technology may include music, sound effects, speech, notifications, or other types of sound content. The technology used to produce audio content may include electrodynamic speakers, piezoelectric speakers, flexible fabric speakers, or any other sound-emitting technology. The sound-producing technology may be in communication with the wearable display system via wired, such as a cable, or wireless, such as Bluetooth, technologies.

Linking Wearable Display Systems to Gaming Machines or Casino Gaming Systems

The wearable display system may be configured to link with a gaming machine or a casino gaming system, for example, via communications connections 250, 260, or another connection. The wearable display system may also implement other features, such as support for player tracking systems. In this embodiment, the wearable display system may be associated with a player tracking account. The wearable display system may be equipped with technologies for interfacing with a player tracking device, such as a wireless communication capability. This wireless capability may be in the form of infra-red (IR), Bluetooth, RFID, or other wireless communication technologies. The wearable display system may incorporate a portable player tracking device that provides player tracking functionality. For example, the portable player tracking device may include communication technologies for communicating with a player tracking device, gaming machine, or other casino gaming or gaming establishment hardware, such as a wireless communications module. The portable player tracking device may store player tracking information, player identification information, or other player-tracking related data.

All of the following methods, along with other methods of the present invention, may be implemented by software, firmware and/or hardware. For example, the methods of the present invention may be implemented by computer programs embodied in machine-readable media. The invention may be implemented by networked gaming machines, game servers and/or other such devices. Those of skill in the art will appreciate that the steps of the methods described herein are not necessarily performed (and in some implementations are not performed) in the order shown. Moreover, some implementations of the methods described herein may include more or fewer steps than those shown and/or described.

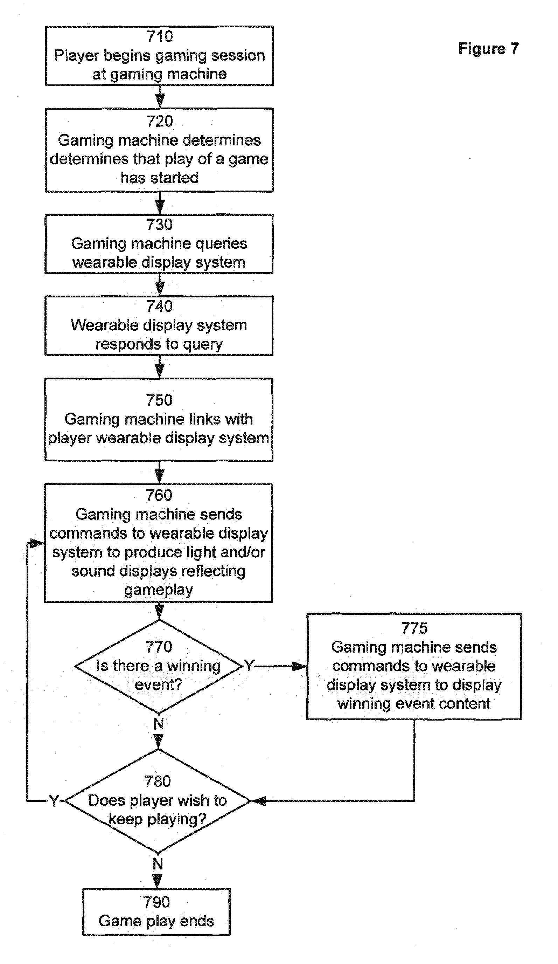

Fig. 7 shows a diagram of an example method of linking a wearable display system with a gaming machine or casino gaming system. In step 710, a player approaches a gaming machine and initiates a gaming session on the gaming machine. The gaming machine may not be connected with a player tracking system, or the player may not wish to use the player tracking system. The gaming machine, after detecting that play has been initiated in step 720, sends out an identification query to the wearable display system in step 730. This query may be sent via communications connection 250 via wireless or wired technologies, although wireless is preferable as wireless technologies require no physical connections to the gaming machine.

The wireless technologies may include radio frequency (RF) transmission or light-transmission. RF technologies, such as RF TX/RX system 227, are typically not line-of-sight dependent, which can be an advantage in some situations and a disadvantage in others. Light-emission/reception technologies, such as light emitter 226 and light detection sensor 225, are typically line-of-sight dependent, although light scattering and reflection can reduce this characteristic. The use of light transmission at some point is preferable in the method shown in Fig. 7 because it may be desired to synchronize each gaming machine only with the wearable display device of the player playing the machine, and this is easier to do with line-of-sight communication technologies. However, there may also be situations where RF technologies are preferable.

The identification query may contain information identifying the gaming machine in a unique manner. This identifier may serve to allow the wearable display system to differentiate between messages from the gaming machine and stray messages from other nearby gaming machines with different identifications. The wearable display system may, after receiving the identifier, respond by broadcasting a unique wearable display system identifier, such as a player ID associated with the wearer of the wearable display system, a player loyalty account number associated with the wearer of the wearable display system, or a serial number identifying the wearable display system, to the gaming machine in step 740 via, for example, communications connection 250. After the gaming machine has received the response from the wearable display system and the wearable display system has established which gaming machine will be sending the wearable display system instructions, the gaming machine and wearable display system may form a communications link in step 750 and may initiate display routines on the wearable display system via commands sent over the communications link in step 760. For example, after establishing a communications link with a gaming machine, the wearable display system may only respond to communications it receives that are prefaced by an identifier associated with that particular gaming machine. Likewise, the gaming machine may only respond to communications it receives that are prefaced by an identifier associated with that particular wearable display system. The communications link may persist until either the gaming machine or wearable display system indicates that it should terminate or until some other event, such as a timeout without any communication exchanges, occurs.

Steps 710 to 750 may, in some embodiments, be optional. A gaming machine may instead be configured to constantly broadcast display instructions to wearable display systems within a certain area via, for example, communications connection 250. Such display instructions may instruct any receiving wearable display system to display content as directed by the gaming machine. There would thus be no need for the gaming machine and wearable display system to exchange identification information at all; the wearable display system would simply display content according to any instructions it received from the gaming machine.

In step 770, the gaming machine may determine if a winning event has occurred on the gaming machine. If a winning event is determined, the gaming machine sends commands to the wearable display system to produce winning event content in step 775 via, for example, communications connections 250 or 260. The wearable display system may display the winning event content for a predetermined period of time or until new content replaces the winning event content, such as different winning event content. The wearable display system may display the winning event content even after game play ends in step 790. Regardless of whether a winning event is determined in step 770, the gaming machine may determine if the player wishes to keep playing. If so, the process returns to step 760. If not, game play ends in step 790.

The method shown in Fig. 7 may be implemented using a combination of both RF and light-emission/reception technologies. For example, the initial "handshake" between the gaming machine and wearable display system, where the gaming machine broadcasts an identification query and the wearable display system may respond by broadcasting a unique wearable display system identifier, may involve at least some use of a light-emission/reception technology, such as light emitters 226 and 248, light sensor 247, and light detection sensor 225, because such technologies may make it easier for the gaming machine to verify the spatial location of the wearable display system. This is because it is possible to mask out light emanating from undesired locations, such as areas where a player of the gaming machine would *not* be. After a connection between the wearable display system and the gaming machine has been established, it may be preferable to switch communications to RF technologies, such as player RF TX/RX system 271 and RF TX/RX system 227, due to higher data rates and reliability.

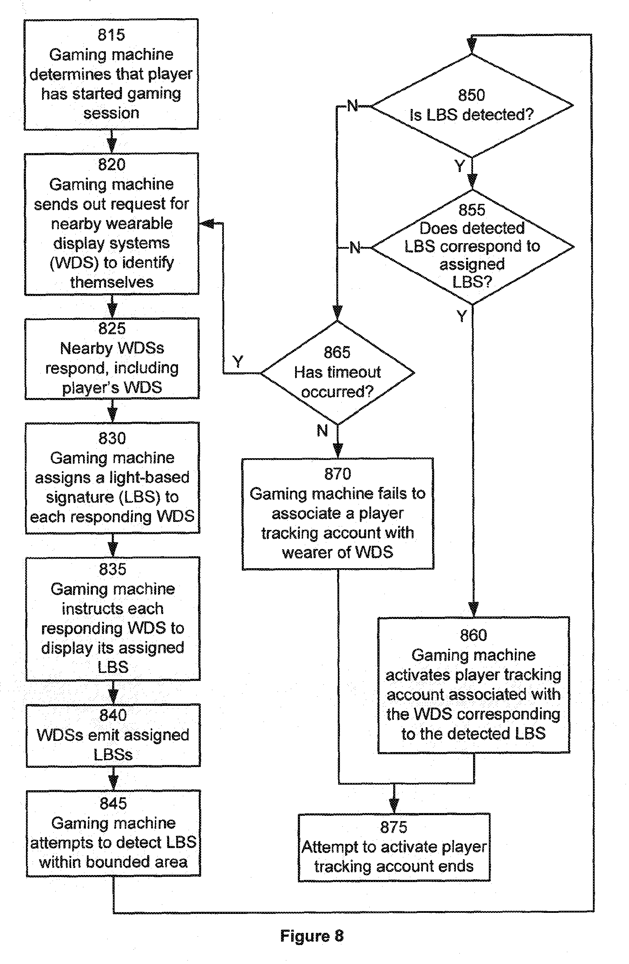

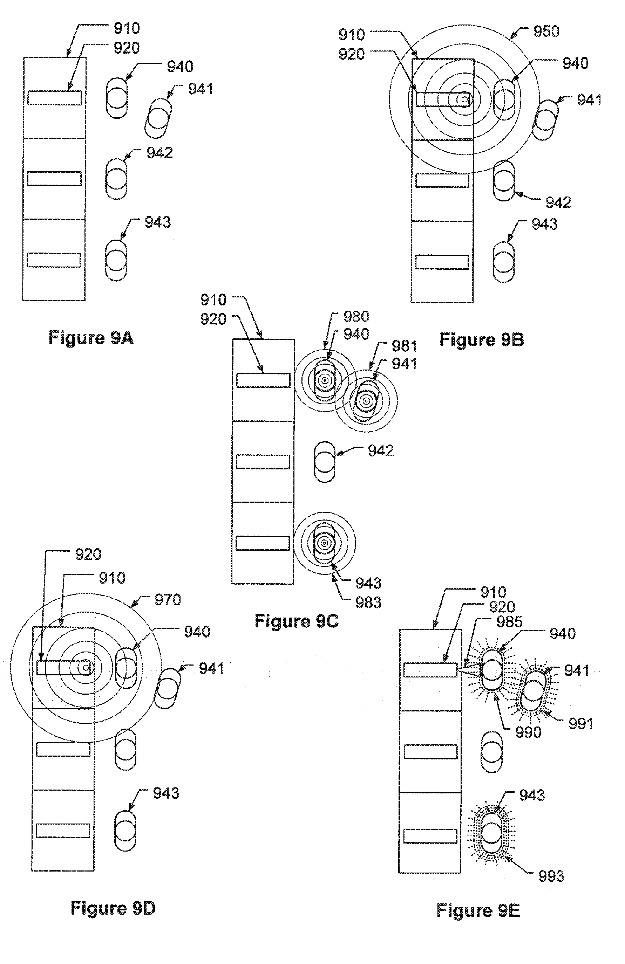

The method shown in Fig. 7 does not implement any rigorous authentication measures due to the fact that the only risk is that a player's wearable display system may accidentally display another player's game events, which, while annoying, is not a happening likely to cause financial damage to a casino or player. However, in many cases, a wearable display system may be used to provide an authenticated link to a player's player tracking account from a gaming machine. In such cases, it may be desirable to provide for more rigorous authentication measures. Fig. 8 diagrams the operation of an example player tracking account authentication system utilizing a wearable display system. Fig. 9 provides overhead-view diagrams of how such a player tracking account authentication system may function.

In Figure 9A, player 940 is equipped with a wearable display system and initiates a game session at a gaming machine 910 (step 810 of Figure 8). The game session start is detected by the gaming machine (step 815 of Figure 8). Player tracking device 920, such as, for example, player tracking device 221 in Fig. 2, associated with gaming machine 910 then sends out a broadcast signal 950 that interrogates nearby wearable display systems in Fig. 9B (step 820 of Figure 8). Alternatively, player tracking device 920 may send out broadcast signal 950 that interrogates nearby portable player tracking devices, such as portable player tracking device 240 in Fig. 2, associated with nearby wearable display systems. Signal 950, for example, may be part of communications connection 250. Signal 950 may be an RF signal designed to trigger an RFID system associated with the wearable display system, such as RFID unit 272. Other RF receiver/transmitter systems besides RFID may also be used, such as RF TX/RX system 227 and player RF TX/RX system 271. Since the signal is a radio signal, every nearby wearable display system within range may receive the signal and respond. IR signals or other wireless communication technologies may be used to similar effect. For example, IR signals emitted and received between light emitters 248 and 226, light sensor 247, and light detection sensor 225 may also be used to establish the communication connection.

In Fig. 9C, players 940, 941, and 943 are all equipped with wearable display systems that have detected the player tracking device interrogation signal 950 shown in Fig. 9B and have responded with response signals 980, 981, and 983 (step 825 of Figure 8) broadcast, for example, via communications connections 250 or 260. Player 942 does not have a portable player tracking device and therefore does not detect or respond to the interrogation signal.

The player tracking device 920 in the gaming machine 910 may then receive the responses 980, 981, and 983 from each wearable display system and must determine which device belongs to the player 940 playing the gaming machine 910. To do so, the player tracking device 920 may assign an authentication code or light-based signature to each wearable display system (step 830 of Figure 8) and send out a second broadcast signal 970 with instructions to each responding wearable display system to emit the assigned authentication code or light-based signature via content displayed via a wearable display device, as shown in Fig. 9D (step 835 of Figure 8). The definition for the light-based signature may be encrypted using a unique pre-defined encryption key associated with each player tracking account. A wearable display system associated with a particular player tracking account would possess the pre-defined encryption key associated with the player tracking account. This would help prevent unauthorized parties from listening to the broadcast signal and replicating the light-based signature contained within the broadcast signal in an attempt to spoof the authentication system.

The definition of the light-based signature may also be broadcast using light-emission technologies, such as focused or shielded LEDs or infrared emitters, directed at an area where the player would be expected to be situated rather than via radio technologies, such as an RF transmitter; this would provide an additional safeguard against unauthorized parties intercepting the light-based signature due to the line-of-sight nature of such signals.

After receipt of the signature definition, each wearable display system then emits its assigned light-based signature via content 990, 991, and 993 displayed on a wearable display device associated with each wearable display system (step 840 of Figure 8) or via light emitter 248. This is depicted in Fig. 9E, where players 940, 941, and 943 are emitting their assigned light-based signatures 990, 991, and 993. Player 940 is emitting assigned light-based signature 990, player 941 is emitting assigned light-based signature 991, and player 943 is emitting assigned light-based signature 993.

A directional light-detecting sensor on the gaming machine or player tracking device, such as light detecting sensor 225, may be configured to detect light-based signatures within a region 985 wherein player 940 is expected to be located (step 845 of Figure 8). The directional light-detecting sensor may detect a light-based signature (step 850 of Figure 8). If a light-based signature is detected (step 850 of Figure 8), the detected light-based signature is compared to the assigned light-based signatures, by, for example, master gaming controller 220 or player tracking device 221 (step 855 of Figure 8). If a corresponding assigned light-based signature is located, the wearable display system associated with that signature and the player tracking account associated with that wearable display system are associated with the game session (step 860 of Figure 8). If a light-based signature is not detected or there is no assigned light-based signature that corresponds to the detected light-based signature, a determination is made whether a timeout has occurred (step 865 of Figure 8). A timeout may occur, for example, when a pre-defined number of link attempts have been made, or when a predetermined period of session game play has elapsed without a successful link. If a timeout has occurred, then the link between the gaming machine and wearable display system cannot be established, at least with respect to the player tracking account associated with the wearable display system (step 870 of Figure 8). The wearable display system may still link to the gaming machine via the method outlined in Figure 7 using, for example, communications connection 250 or another suitable connection technology. After the attempts to authenticate the player tracking account of the player have either succeeded or failed, the method ends at step 875.

As mentioned previously, the sensor used to detect a light-based signature may be configured to only detect light emanating from within a pre-defined region. The pre-defined detection region for detecting light-based signatures may be implemented by masking a light sensor such that only light emanating from within the detection region may directly strike the light sensor. Such masking may involve the presence of a player of the gaming machine. For example, if the gaming machine is equipped with a seat, the light sensor may be embedded in the seat such that it may detect light emitted from a wearable display system worn by a seated player but would be prevented from detecting light from other nearby wearable display systems because the bulk of the seated player would block out such light.

The gaming machine or player tracking device may be equipped with more than one light-detection sensor. The light-detection sensors may be used to assist in more reliably ascertaining which wearable display system is being worn by the player of the gaming machine. For example, a gaming machine or player tracking device may utilize two sets of sensors to assist in accurately identifying the wearable display system worn by a player of the gaming machine. The first set may be configured to observe a zone in which the player is expected to be located, and it is therefore expected that a light signal emitted from a wearable display system located in that zone would be detected. The second set may be configured to observe locations other than that zone, such as to the left and right of the gaming machine. If the same light signal is observed outside of the zone, then this may be used to signal that further verification is needed of the wearable display device since the wearable display device appears to be in two locations at once, which may be evidence of an attempt to spoof the authentication system.

This method of authenticating a player tracking account is highly advantageous as the method requires no interaction on the part of the player associated with the player tracking account—the player merely needs to begin playing a gaming machine and the gaming machine or player tracking device and the player's wearable display system complete the authentication transaction without any need for the player to input a card, code, fingerprint, or other identifying technologies. As a further safeguard, the gaming machine may greet the player using information from the player tracking account after performing the authentication. If the player tracking account is incorrect, the player may ask for help from casino staff. If the automatic authentication process utilizing wearable display systems fails to authenticate a given player, a backup authentication process, such as requiring a fingerprint, password, or other authentication technologies may be utilized.

The above method of linking/authenticating a player tracking account to a game session using a wearable display system may also incorporate a portable player tracking device, such as portable player tracking device 240. Such a portable player tracking device may be integrated with the wearable display system or otherwise connected with it, and may provide additional player tracking capabilities, such as backup authentication measures in the event that linkage/authentication via the wearable display system fails. Communications between gaming machine 201 and wearable display system 242 may also be routed via portable player tracking device 240.

Wide-Area Gaming With Wearable Display Systems

The wearable display system may be used in many other ways in a gaming context other than as an auxiliary or secondary display for a gaming machine. For example, such a system may be configured to function independently of a gaming machine or gaming establishment system to allow the wearer of such a device to display images or animations indicating a desire for assistance, a desire for companionship, a mood of the wearer, heightened visibility for safety purposes, or any number of other indicators. The wearable display system may also be configured for use in games or activities in a gaming environment that may not involve the wearer playing a gaming machine. These games may be thought of as wide-area games, as they typically involve players who are distributed over an area and make the players part of the game via use of wearable display systems worn by those players.

Wide area gaming may be implemented by a casino gaming or gaming establishment system configured to communicate with players wearing wearable display systems via various technologies, such as bank switches 615 and 616, main network device 622, gaming machines 602, and other devices capable of establishing communications between the casino gaming or gaming establishment system and the wearable display systems. For wide-area gaming, a wide area gaming server may be configured to manage aspects of a wide-area game, such as setting up a wide area game, registering players for a wide-area game, enrolling registered players in a wide-area game, running the wide-area game, and determining wide-area game winners. For example, wide-area gaming server 207/627 may be used for such purposes. Wide-area gaming server may also communicate with other servers to access other functionality. For example, wide-area gaming server 627 may communicate with player tracking data server 623 to facilitate player registration and may communicate with facilities server 624 to facilitate location tracking of registered players. Of course, such functions may all be consolidated into fewer servers, distributed amongst more servers, or assigned to different entities.

One example of a wide-area game that may be implemented using wearable display systems is "scavenger poker". In scavenger poker, players dispersed over a wide area are dealt a hand of poker cards. The players are also assigned an additional card that is not part of their hand of poker cards. Players may then seek out other players whose additional card most favorably completes the players' dealt hands. Thus, the game is part poker, part scavenger hunt.

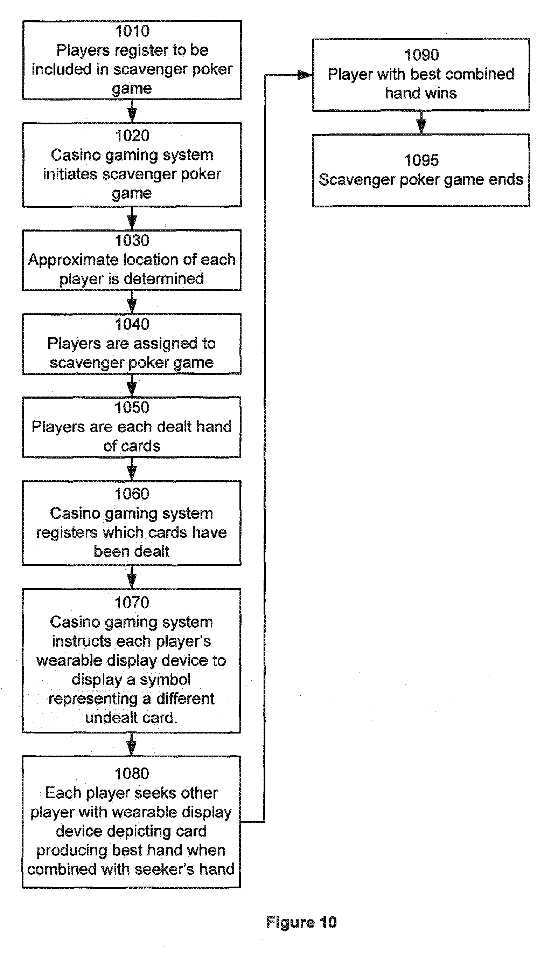

Fig. 10 diagrams a method by which scavenger poker may be played. In step 1010, players for the scavenger poker game register with the gaming establishment as players who desire to play scavenger poker. The wearable display systems of such players are registered with a casino gaming system and associated with the scavenger poker game; such associations may be performed by wide-area gaming server 207/627. In step 1020, the casino gaming system initiates a scavenger poker game. In step 1030, the casino gaming system may locate the registered players. In step 1040, the casino gaming system may assign the players that will be playing a particular instance of scavenger poker. Such assigned players may consist of a subset of the registered players. The subset may be chosen according to a rule or randomly; the subset may also be chosen based on which players are within a defined play area. Such selections may be determined, for example, by wide-area gaming server 627.

In step 1050, the players may be dealt a "hand" of cards. This may be a hand of physical cards, or the hand may be dealt virtually through an electronic device such as a gaming establishment-issued or controlled display device, a cell phone, or a PDA, similar to PDA 670. Wide-area gaming server, for example, may randomly distribute the dealt cards. When each player is dealt a hand of cards, the hand may be a complete hand or a partial hand. The player may choose to discard one or more cards if they wish, although in some implementations, the player may be prevented from doing so and may be dealt an incomplete hand. In step 1060, the hand dealt to each player may be separately tracked by the casino gaming system to prevent players from swapping in their own cards to achieve a more favorable hand. The casino gaming system may then select a number of cards from the "undealt" cards. These selections may be done by the casino gaming system, such as by wide-area gaming server 627, or by a human being.

In step 1070, the casino gaming system may instruct each wearable display system to display a different one of the selected undealt cards via, for example, communications connections 631-635. The casino gaming system may distribute the cards over a wide area of the casino and attempt to ensure that cards that are most valuable to a player are not in the immediate vicinity of the player so as to encourage the player to roam the casino in search of valuable cards. In such an implementation, a location determination technology may need to be used to determine the player's location relative to other players; such technologies are described elsewhere in this application. In step 1080, the players of the scavenger poker game may seek a player of the game whose wearable display system shows the card that completes the seeking player's hand to achieve the most optimal result. A player may indicate a completed hand by notifying a game host, "turning in" the located player to a central game host area, taking a photograph of the located player, obtaining a signature from the located player, obtaining a numeric code from the player, or by any other method that would provide evidence that the player had located the located player and their displayed card. The player's wearable display system may also communicate directly with the located player's wearable display system to obtain an electronic code indicating the identity of the located player and the located card. The complete poker hand results may be communicated back to wide-area gaming server 627for win determination and validation. The player who achieves the highest-scoring poker hand in this manner may be declared the winner of the round of scavenger poker (step 1090) by wide-area gaming server 627. In step 1095, the scavenger poker game ends, although further rounds of play such as described in steps 1050 through 1090 may occur before step 1095 is performed.

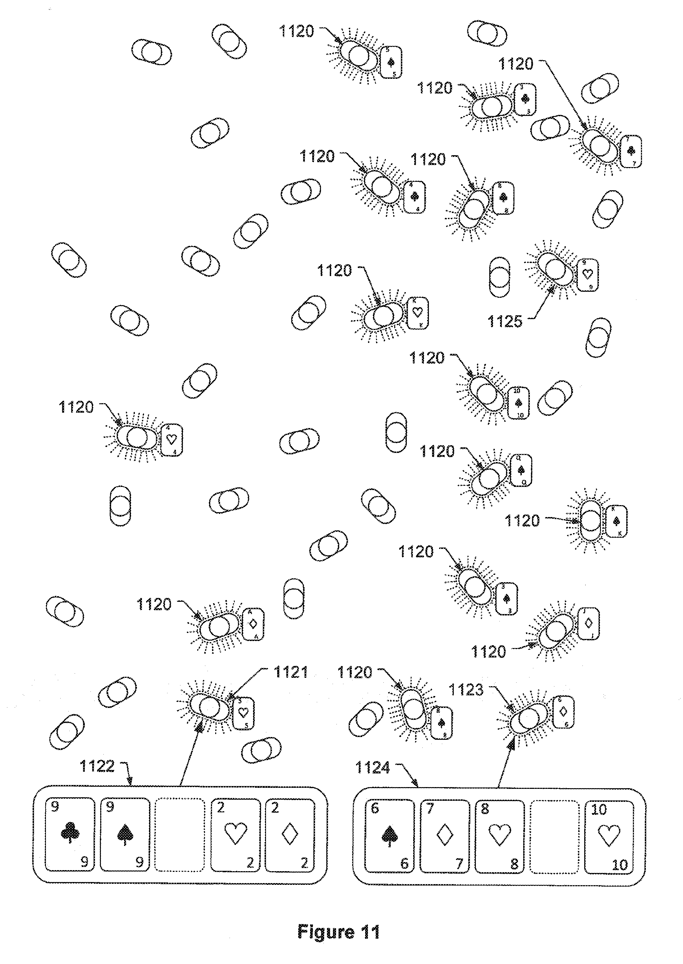

Fig. 11 depicts a symbolic overhead view of a gaming establishment floor, with many patrons milling about. Participants 1120, 1121, 1123, and 1125 in a scavenger poker game are all sporting wearable display systems. Player 1121 has been dealt hand 1122, which consists of a 9 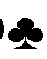 , 9 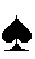 , 2 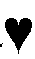 , and 2 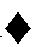 . Player 1123 has been dealt hand 1124, which consists of a 6 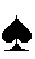 , 7 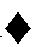 , 8 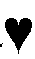 , and 10 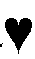 . In this example, only players 1121 and 1123 have been dealt hands; the other players are merely acting as "undealt cards". Player 1121 currently has two pair, which is a very low-ranked winning poker hand. Player 1123 currently has a worthless hand. Both players may attempt to locate a fifth card to complete their hands and form a higher ranked hand.

While there are many cards displayed by the various wearable display systems worn by players 1120 of the scavenger poker game, player 1125's wearable display system is depicting a 9 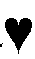 . Since the 9 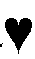 would allow player 1123 a straight, player 1123 may seek out player 1125 to complete their hand and achieve a higher ranked hand—one that beats player 1121's two pair. However, the 9 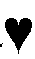 would also allow player 1121 to complete their hand to achieve a full house, which would beat player 1123's straight. The scavenger poker game may be configured to allow multiple players to "claim" a card shown on a wearable display system, may award the card to the first player to claim the card, may require that the wearer of the wearable display system depicting the card choose which player is to be allowed to claim the card, or may use some other method to determine how "found" cards are awarded. Such methods may involve physical transfer of tickets or vouchers identifying the "found" player/card to the finding player or may involve the electronic transfer of information identifying the "found" player/card. Such electronic transfer may use wearable display systems worn by both players, using communication methods (and even authentication and identification methods) described elsewhere in this application.

Many variations of the example scavenger poker game are also contemplated. For example, players may be dealt a hand of three cards and then seek out a fourth card from the cards displayed on other player's wearable display systems. After each player has located and selected a fourth card from those depicted on other players' wearable display systems, a fifth card is dealt to each player to complete their hand. Each player may be dealt their own fifth card, or one fifth card may be selected to complete the hand of every player. In one variation, the fourth and fifth cards may both be displayed on a wearable display system and the player must take both cards together. In another variation, players may need to gain permission from the player wearing a card that they are seeking to make that card a part of their hand. In yet another variation, cards may be duplicated. A time limit may be introduced to prevent players from excessive strategizing. Alternatively, the cards displayed on players' wearable display systems may be made to change after a certain period of time has elapsed. These play variables may be controlled by wide-area gaming server 627.

The scavenger poker game may be implemented using any set or sets of symbols and differently ranked combinations of those symbols. While the example scavenger poker method discussed above utilizes playing cards, such a method would only be able to support a limited number of players due to the small size of the available deck—a maximum of approximately 10 people may play a game of scavenger poker using a single deck of cards. However, if the scavenger poker game instead utilizes a much larger set of symbols and combinations, support for a much larger participant group may be provided. For example, instead of playing cards, various slot machine symbols and combinations of slot machine symbols may be utilized.

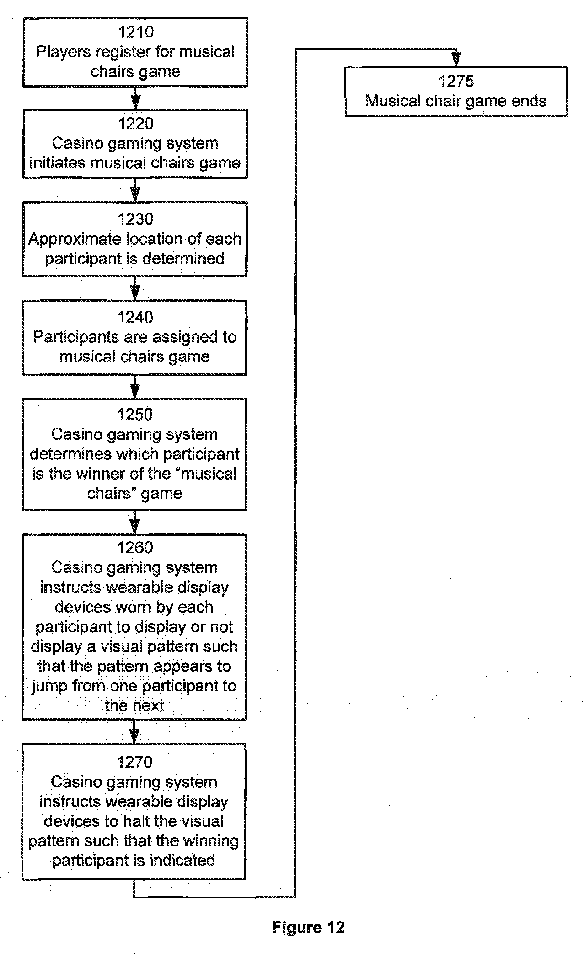

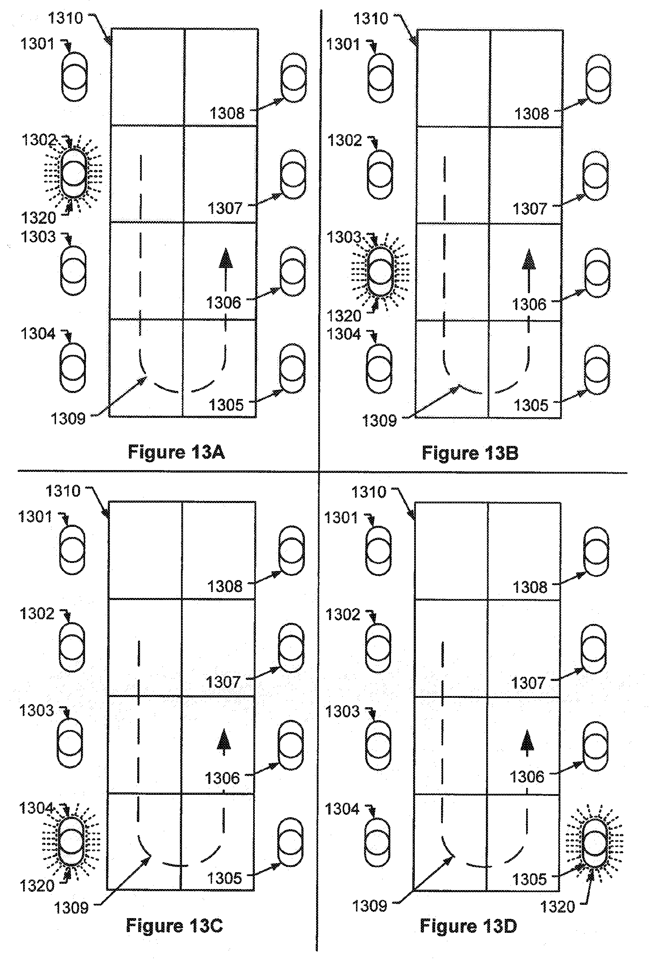

Another example wide-area game is depicted in Figs. 12 and 13. Fig. 12 diagrams an example method for a "musical chairs" game utilizing wearable display devices. In step 1210, a player may register with a gaming establishment as desiring to be included in wide area games or a specific wide-area game, such as musical chairs. Such registration may involve the player specifying a dollar limit, dollar limit per hour, or other criteria that may govern how often the player is entered into an instance of the wide area game. The registration process may tie in to a responsible gaming system to obtain some of these criteria. Such registration may occur automatically when the player chooses to begin playing a gaming machine, for example, via the method depicted in Fig. 8. Alternatively, a gaming machine may present a player with a graphical user interface allowing the player to register for such games. Registered players may be associated with and wearing a wearable display system. Such player registrations may be managed by, for example, wide-area gaming server 627 or player tracking data server 623.

In step 1220, the casino gaming system may initiate a "musical chairs" game. Such a game may also be thought of as a "spin the wheel" game, as will become evident in this discussion. After initiating a musical chairs game, the casino gaming system may locate players to participate in the game in step 1230. Players in a given spatial area or arrangement may be located. Location determination may occur using portable player tracking devices, wearable display systems, the presence of a player at a known geographic location (such as at a particular gaming machine), signal triangulation, RFID, or any other suitable method. For example, RFID devices 611 may be used to locate a player, as shown in Fig. 6 and described earlier. After locating players in a given spatial area, the casino gaming system assigns players from the pool of located players to a musical chairs game in step 1240. The assignment may be determined, for example, by wide-area gaming server 207/627 in conjunction with player tracking data server 203/623 and facilities server 204/624. Of course, as with scavenger poker, the exact configuration of such servers or their functionality may be subject to considerable variation that is contemplated as still being within the scope of the invention. Such assignments may take into account the preferences established by the players during registration step 1210 and the locations of players established in step 1230. For example, if a player has already bet their maximum specified wagering amount per hour established in step 1210, that player may not be assigned to a musical chairs game even if they are otherwise in a location that would ordinarily result in their inclusion in the game.

In step 1250, casino gaming system may determine which of the assigned players is the winning player. This may be done according to the results of a random number generator, or may be done according to other rules. After determining which player is the winning player, the casino gaming system may issue commands, via, for example, communications connections 631-635, to the wearable display systems of the assigned players to produce light-based effects in a manner that gives the impression that a winning "marker" is traveling from player to player (step 1260) and which will indicate the winning player when the marker becomes stationary (step 1270). This may be done by causing the wearable display system of an assigned player to illuminate and then go dark followed by the same behavior in the next closest player's wearable display system. This process may be repeated as many times as desired to give the impression that the marker is traveling about a circuit of the participating players. The duration of the illumination for each player may be varied to convey a sense that the marker is accelerating or decelerating. It may be desirable to assign players who are configured in an approximately contiguous loop, based on the locations determined in step 1230, to aid in forming this impression. In step 1275, the musical chairs game ends, although several rounds of game play as described in steps 1250-1270 may occur before step 1275 is performed.

The determination of the winning player may also be done while the light-based effects are being produced; the determination is not required to be performed prior to initiating the light-based effects.

Fig. 13 depicts an overhead view of a casino gaming area in which an example musical chairs game according to the method diagrammed in Fig. 12 is depicted. In Fig. 13, players 1301-1308 are playing on a bank of eight casino gaming machines 1310. In this case, the casino gaming system may initiate a musical chairs game and assign players 1301-1308 to the game. Assigning players 1301-1308 to a musical chairs game will result in an approximately contiguous loop of players since the physical configuration of the gaming machines in bank 1310 inherently forces the players to arrange themselves in a substantially rectangular array.

The casino gaming system may not require that players 1301-1308 have registered to play musical chairs if such registration is unneeded. For example, if the casino gaming system initiates the musical chairs game as a free bonus to the players of the gaming machines in bank 1310, then no registration may be required since players 1301-1308 will not be required to make a wager on the game.

In Fig. 13A, the casino gaming system has initiated the musical chairs game and selected player 1302 as the first player to have their wearable display system produce light-based effects 1320. As indicated by the arrow 1309 in Figs. 13A-D, the marker is to travel in a counter-clockwise manner in this example. In Fig. 13B, player 1302's wearable display system has ceased to produce the light-based effects 1320, and player 1303's wearable display system is now producing the light-based effects 1320. In Fig. 13C, player 1303's wearable display system has ceased to produce the light-based effects 1320, and player 1304's wearable display system is now producing the light-based effects 1320. And in Fig. 13D, player 1304's wearable display system has ceased to produce the light-based effects 1320, and player 1305's wearable display system is now producing the light-based effects 1320.

Player 1305 has been selected by the casino gaming system as the winner of the musical chairs game, as indicated by player 1305's wearable display system being the last wearable display system to display the light-based effects 1320. Of course, this is an example depiction only. Musical chairs with wearable display systems may be configured to allow the marker to make repeated circuits of all participating players as well as to allow the marker to change directions. There may also be multiple markers displayed on multiple wearable display systems; such markers may travel in different directions or the same directions, and may be used to indicate an even higher level of award than is usual if the multiple markers all end up indicating the same individual as the winner.

Wearable display systems may also be configured to display light-based effects other than the marker light-based effects rather than ceasing to display light-based effects entirely. For example, all of the wearable display systems worn by participants of a musical chairs game may be instructed to display one color, and whichever wearable display system is to indicate the marker may be instructed to display a different color.

Non-gaming Uses of Wearable Display Systems

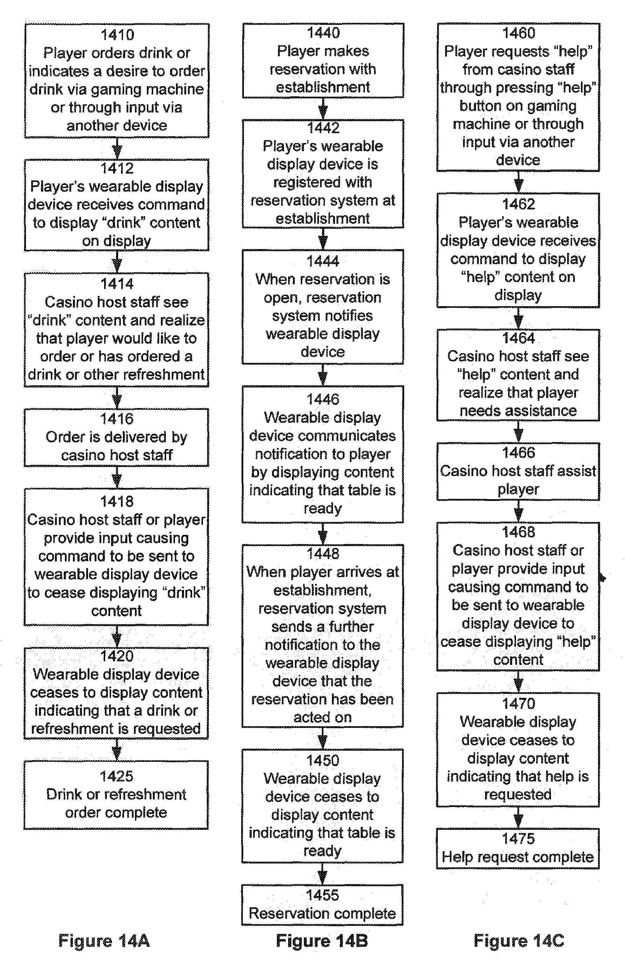

There are also other methods by which wearable display systems may be used in a casino gaming establishment. Figs. 14A-C diagram various methods that can be implemented in a casino gaming establishment utilizing a wearable display system. Fig. 14A relates to a method utilizing a wearable display system to assist in providing refreshments to wearers of the wearable display system.

In step 1410, the wearer of the wearable display system may order a drink or refreshment or indicate a desire to order a drink or other refreshment. This may be done by providing input to the wearable display system directly, via, for example, input system 246, or by placing a request via a service window implemented on a gaming machine that the wearable display system may be in communication with; the gaming machine would then instruct the wearable display system appropriately via communications connection 250. In step 1412, the wearable display system may cause content indicating a desire for refreshments or that refreshments have been ordered to be displayed on the wearable display device. Such content may consist of an image, icon, text, or animation indicating this. In step 1414, casino staff may observe the content and realize that the wearer wishes to place an order or have their order delivered. The casino staff may then approach the wearer to take or deliver the order in step 1416. In step 1418, after the order has been fulfilled, casino staff or the player may cause the wearable display system to cease displaying the content. Step 1418 may be performed via direct input via input system 246 or via a command received from a gaming machine 201 or casino gaming or gaming establishment system 202 via communication connections 250 or 260. In step 1420, the wearable display system has stopped displaying the content, and in step 1425, the drink or refreshment order is complete.

Fig. 14B relates to a method for alerting a wearer of a wearable display system that a table has become available at a restaurant or bar at which the wearer has a reservation.

In step 1440, the wearer may make a reservation with a restaurant, although such reservations may also be at a drinking establishment, entertainment venue, salon, or other personal service or entertainment venue. In step 1442, the wearer's wearable display system may be registered with the reservation system at the restaurant. The wearer may then wander freely throughout the casino gaming establishment. In step 1444, when a table is available to fulfill the reservation, the reservation system may send a notification to the wearer's wearable display system indicating that the table is available via, for example, communications connections 631-635.

The notification may be sent via any suitable communication system and may be sent via a communications link established via a gaming machine that the wearer is using. In step 1446, the wearable display system may display content that indicates that notification has been received that the reserved table is available. The wearer may then proceed to the restaurant where they made the reservation. In step 1448, the reservation system may detect or be instructed that the wearer has arrived at the restaurant and acted on the notification. The reservation system may send another notification, via, for example, communications connections 631-635, to the wearable display system that the reservation has been fulfilled. In step 1450, the wearable display system ceases to display content associated with the reservation in response to the notification that the reservation has been fulfilled, and in step 1455, the reservation is completed.

Fig. 14C relates to a method for alerting casino staff that a player wearing a wearable display system needs assistance. In step 1460, the player may request help from casino staff by initiating a help function on a gaming machine or through other technologies, such as through input system 246, to the wearable display system. If help is requested via the gaming machine, the gaming machine may send the appropriate commands to the wearable display system via communications connection 250. In step 1462, the player's wearable display system may receive a command to display a help indicator via the wearable display device. The wearable display system may instruct the wearable display device to display "help" content on the wearable display device. This help content can be icon, text, animation, or image-based.

The content may even indicate what type of help is desired—for example, if a player requires assistance with rules of the game, a blue "?" may be displayed. If a player requires assistance with their player tracking account, a yellow "!" may be displayed. This may allow casino staff most suitably trained to answer the player's questions to respond. In step 1464, casino staff may observe the content and realize that assistance is required. In step 1466, casino staff may assist the player. In step 1468, casino staff or the player may provide input to the wearable display system, via input system 246 or wirelessly via other communications connections, that notifies the wearable display system that assistance has been rendered or is no longer needed. In step 1470, the wearable display system ceases to display the content in response to the input, and in step 1475 the help request is completed.

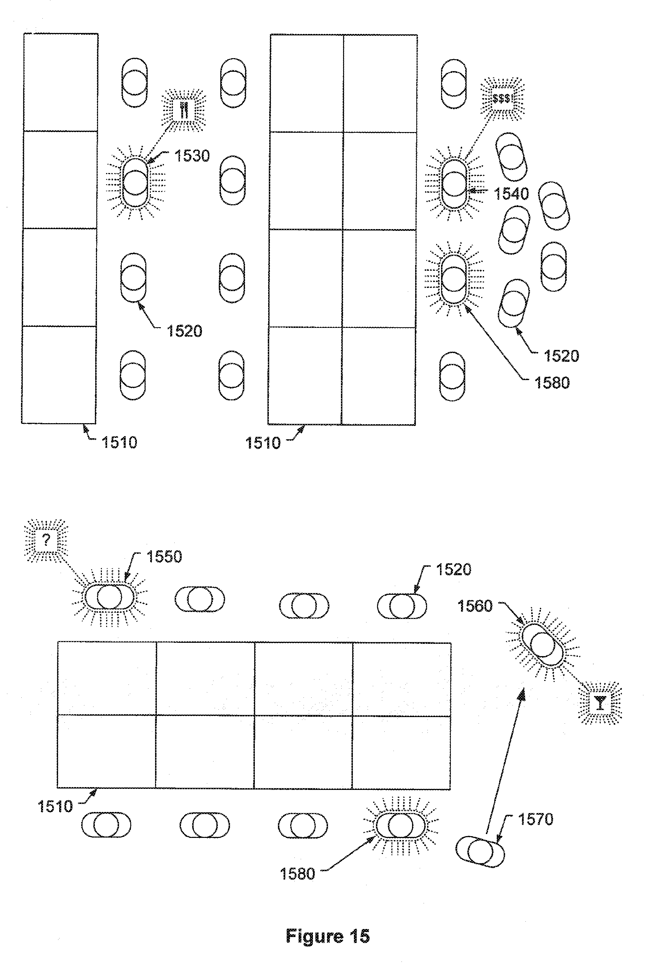

Fig. 15 provides a symbolic overhead view of an example casino gaming establishment floor. Players with wearable display systems and without wearable display systems are engaged in various activities about the floor, mostly centered about banks 1510 of casino gaming machines. Players 1520 are not equipped with wearable display systems in this depiction. Players 1530, 1540, 1550, 1560, and 1580 are all equipped with wearable display systems.

Players 1580 are engaged in playing games on gaming machines. Their wearable display systems have synched with their respective gaming machines and are displaying light effects reflecting game play.

Player 1540 has just experienced a game-winning event. Her wearable display system is displaying content indicating a winning event—in this case, "$$$!".

Player 1560 wishes to order a drink and her wearable display system is displaying content indicating this desire; hostess 1570 has observed this content and is approaching player 1560.

Player 1530 has previously placed a reservation at a nearby restaurant. The reservation system has determined that player 1530's reservation is ready. Player 1530's wearable display system is displaying content indicating that the table is available.

Player 1550 is confused about some aspect of the game that he is playing and has requested help. Player 1550's wearable display system is displaying a blue question mark symbol, although no casino staff have observed the blue question mark symbol yet.

Although several embodiments of this invention have been described in detail herein with reference to the accompanying drawings, it is to be understood that the invention is not limited to these precise embodiments, and that various changes and modifications may be effected therein by one skilled in the art without departing from the scope of spirit of the invention as defined in the appended claims.

Indeed, it will be appreciated that unless features in any of the particular preferred embodiments are expressly identified as incompatible with one another or the surrounding context implies that they are mutually exclusive and not readily combinable in a complementary and/or supportive sense, the totality of this disclosure contemplates and envisions that specific features of those complementary embodiments can be selectively combined to provide one or more comprehensive, but slightly different, technical solutions.

## Claims

1. A system, comprising:
a first wearable display device controller configured to communicate with a gaming machine; and
a first wearable display device configured to communicate with the first wearable display device controller, wherein the first wearable display device is configured to display first content in response to a communication from the gaming machine, wherein the first content comprises a still image, animation, or text, and wherein the first wearable display device is integrated with a fashion accessory or garment.

2. The system of claim 1, wherein the display of the first content is in coordination with a display of second content by the gaming machine.

3. The system of claim 2, wherein the coordination comprises either displaying:
the first content in synchronicity with displaying the second content; or
an animation including the first content and the second content, wherein the animation spans between the first wearable display device and a display device of the gaming machine.

4. The system of any preceding claim, the first wearable display device controller further configured to cause the first wearable display device to indicate a team of a first player wearing the first wearable display device.

5. The system of claim 4, the first wearable display device controller further configured to cause the first wearable display device to indicate that a second player affiliated with the team has experienced a gaming event.

6. The system of any preceding claim, further comprising:
a player tracking device configured to cause the first wearable display device to display a first light-based signature; and
one or more detection devices configured to detect a first detected light-based signature and to communicate detection of the first detected light-based signature to a player tracking system or the player tracking device.

7. The system of claim 6, wherein the player tracking device or the player tracking system is further configured to determine if the first detected light-based signature corresponds with the first light-based signature.

8. The system of claim 6 or 7, wherein the one or more detection devices are further configured to detect the first detected light-based signature only within a defined zone.

9. The system of claim 8, wherein the player tracking device is further configured to:
detect a second detected light-based signature outside of the defined zone; and
determine if the second detected light-based signature corresponds with the first detected light-based signature.

10. The system of any of claims 6 to 9, wherein the one or more detection devices are configured to detect infrared or ultraviolet light and the first wearable display device is configured to emit infrared or ultraviolet light.

11. The system of any of claims 6 to 10, the player tracking device further configured to cause second through N^{th} wearable display devices to display corresponding second through N^{th} light-based signatures.

12. The system of any of claims 6 to 11, wherein the first through the N^{th} light-based signatures are different from each other.

13. The system of any of claims 6 to 12, wherein the player tracking device is configured to:
cause each of the first through N^{th} light-based signatures to each be displayed by the corresponding wearable display device of the first through N^{th} wearable display devices at a different time.

14. A method of displaying gaming content comprising:
establishing a communications link between a wearable display system and a gaming system, wherein the wearable display system is integrated with a garment or fashion accessory;
communicating first content to the wearable display system; and
displaying the first content on the wearable display system, wherein the first content comprises a still image, animation, or text.

15. A method, the method comprising:
configuring a first wearable display device for communication with a gaming machine, wherein the first wearable display device is integrated with a fashion accessory or garment;
communicating first instructions to the first wearable display device from the gaming machine;
causing first content to be displayed on the first wearable display device responsive to the instructions, the first content including a first light-based signature;
detecting a first detected light-based signature; and
comparing the first detected light-based signature against the first light-based signature.
